# EUROPÄISCHE PATENTANMELDUNG

(11) **EP 3 643 163 A2**
(43) Veröffentlichungstag der Anmeldung: **29.04.2020**
(21) Anmeldenummer: 19204251.3
(22) Anmeldetag: 21.10.2019
(51) Int. Cl.: A01K 1/01, A01K 1/02

(54) **TRENNUNGSVORRICHTUNG ZUR EMISSIONSREDUKTION IN STÄLLEN UND TIERSTALL**

(30) Priorität: 22.10.2018 LU 100969
(71) Anmelder: Big Dutchman International GmbH, 49377 Vechta (DE)
(72) Erfinder: Ernst, Alexander, 49356 Diepholz (DE)
(74) Vertreter: Eisenführ Speiser

(57) **Zusammenfassung**

Die Erfindung betrifft eine Trennungsvorrichtung (10, 520) zur Bildung einer Standfläche für Nutztiere, insbesondere Schweine, und zur Emissionsreduktion in Ställen einen Tierstall und ein Verfahren zur Trennung von Kot und Urin in einem Tierstall. Die Erfindung betrifft insbesondere eine Trennungsvorrichtung (10, 510) zur Bildung einer Standfläche für Nutztiere, insbesondere Schweine, und zur Emissionsreduktion in Ställen, insbesondere in Schweineställen, umfassend einen Grundrahmen (100), ein Ablaufelement (200) mit zwei oder mehreren Ablaufrinnen (210), die jeweils ein Abflussende (214) umfassen, und Schultern (232-241) zwischen denen sich jeweils eine der zwei oder mehreren Ablaufrinnen (210) orthogonal zu einer Ablaufrichtung (212) erstreckt, ein flüssigkeitsdurchlässiges Endlosband (300) mit einem Obertrum (302) und einem Untertrum (304), wobei das Ablaufelement (200) derart an dem Grundrahmen (100) angeordnet ist, dass eine Ablaufrichtung (212) der zwei oder mehreren Ablaufrinnen (210) in Richtung des Abflussendes (214) gerichtet ist.

## Beschreibung

Die Erfindung betrifft eine Trennungsvorrichtung zur Bildung einer Standfläche für Nutztiere, insbesondere Schweine, und zur Emissionsreduktion in Ställen, insbesondere in Schweineställen, einen Tierstall, insbesondere Schweinestall, und ein Verfahren zur Trennung von Kot und Urin in einem Tierstall.

Tiere, insbesondere Schweine, werden regelmäßig auf sogenannten Spaltenböden gehalten. Ein Spaltenboden weist eine Vielzahl an Spalten auf, sodass flüssige und feste Exkremente der auf dem Spaltenboden gehaltenen Tiere durch die Spalten entsorgt werden. Die Entsorgung erfolgt durch die Spalten und durch eine anschließende Abfuhr der flüssigen und festen Exkremente in einem Bereich unter dem Spaltenboden. Daraus resultiert, dass unter dem Spaltenboden eine Mischung aus festen und flüssigen Exkrementen entsteht, die auch Gülle genannt wird.

Gülle führt regelmäßig zu einem Geruchs-, Entsorgungs- und/oder Tierwohlproblem. Die Probleme resultieren insbesondere aus einer Ammoniakbelastung des Stalls. Ammoniak entsteht aus Harnstoff tierischer Exkremente mittels Hydrolyse, wobei überschüssig aufgenommener Stickstoff von den Nutztieren größtenteils in Form von Harnstoff im Urin ausgeschieden wird und durch das Enzym Urease zu Ammoniak umgewandelt wird. Das Enzym Urease wird mit dem Kot ausgeschieden. In Schweineställen entsteht regelmäßig eine erhebliche Emission von Ammoniak. Sowohl aufgrund von Tierwohlaspekten, von Regularien als auch aufgrund des Anwohnerschutzes wird angestrebt, die Ammoniakemission aus Tierställen zu reduzieren. Bekannt sind Luftwaschanlagen, die mit Säurebädern die Luft von Staub und Ammoniak befreien. Infolge dessen bleibt jedoch die Ammoniakbelastung innerhalb des Stalls gleich hoch, wie sie auch ohne die Luftwäsche wäre, denn es wird lediglich die aus dem Stall ausgeblasene Luft gewaschen. Eine Luftwäsche adressiert also lediglich die Umgebung des Stalls, aber im Wesentlichen nicht das Klima innerhalb des Stalls. Ammoniak ist ein stechend riechendes, farbloses und giftiges Gas, das die Schleimhäute von Mensch und Tier reizt sowie zu Tränen führt. Darüber hinaus kann Ammoniak beim Einatmen zu Reizhusten und Brechreiz führen.

Aus Tierwohlgesichtspunkten wird in zunehmendem Maße den Tieren innerhalb von Ställen Beschäftigungsmaterial zur Verfügung gestellt, welches beispielsweise aus natürlichen Materialien bestehen kann, beispielsweise Heu, Stroh, Luzerne, Sägemehl oder Presslinge aus den genannten oder weiteren Materialien. Durch die Beschäftigung der Tiere mit den zur Verfügung gestellten Materialien auf beispielsweise einem Spaltenboden, vermischen sich Kot, Urin und das Beschäftigungsmaterial, was in der Folge gesamtheitlich zu Gülle wird und in der Konsequenz zu einem erhöhten Feststoffanteil in der Gülle führt. Eine derartige Gülle kann dazu führen, dass das Güllesystem seine Funktion zumindest nicht mehr in der vorgesehenen Weise ausführen kann oder versagt. Die Gülle ist dann beispielsweise nicht mehr rühr- und/oder pumpfähig und/oder kann nicht mehr verbracht werden. Derzeitige Haltungssysteme, die mit einem Güllesystem funktionieren, besitzen Grenzen für den Einsatz von Beschäftigungsmaterial, das von den Tieren verspielt wird.

Aus der DE 10 2016 000 308 A1, der DE 10 2016 013 326 A1 und der WO 2017/121864 A1 ist ein Stall mit einem Abkotbereich bekannt, dessen Boden ein Förderband ist. Das Förderband weist eine gewisse Neigung auf, sodass die flüssigen Exkremente entgegen einer Förderrichtung des Kots ablaufen können.

Aus der WO 2007/016758 A1 ist ein System bekannt, mit dem die flüssigen und festen Exkremente in einem Tierstall getrennt werden können. Unter einem Spaltenboden ist ein geneigtes Förderband angeordnet, das die flüssigen Exkremente in die eine Richtung fördert und die festen Exkremente in eine entgegengesetzte Richtung.

Aus der am Anmeldetag der hiesigen Anmeldung noch nicht veröffentlichten europäischen Patentanmeldung mit der Anmeldenummer EP18185476.1 ist ein Strohstall bekannt, in dem eine Strohmatte angeordnet ist, die durch ein automatisches Einstreuen von Stroh erzeugt wird.

Ferner ist aus der EP 1 377 158 B1 eine Vorrichtung mit einem horizontal bewegbaren Boden zur Haltung von Tieren bekannt, wobei durch eine Belastung mit einer Gewichtskraft Energie erzeugt und diese Energie für den Vortrieb des Bodens verwendet wird. Die WO 2013/048333 und die EP 1 678 059 B9 offenbaren Lösungen für den schrittweisen Antrieb eines als Förderband ausgebildeten Stallbodens. Aus der WO 02/43472 A1 ist ein als Förderband ausgebildeter Stallboden bekannt, wobei das Förderband eine Sensorik an einem Ende aufweist, mit der das Förderband gestoppt werden kann. Die US 1,090,131, US 1,159,129 und US 3,274,973 offenbaren jeweils für Harn durchlässige Förderbänder mit einem Kotabstreifer, bei denen eine Kot-Harn-Trennung erfolgt.

Die existierenden Systeme und Verfahren zur Reduktion der Ammoniakbelastung in Tierställen bieten verschiedene Vorteile, jedoch sind weitere Verbesserungen wünschenswert. Es ist daher eine Aufgabe der vorliegenden Erfindung, eine Trennungsvorrichtung zur Bildung einer Standfläche für Nutztiere, insbesondere Schweine, und zur Emissionsreduktion in Ställen, insbesondere in Schweineställen, einen Tierstall, insbesondere Schweinestall, und ein Verfahren zur Trennung von Kot und Urin in einem Tierstall bereitzustellen, welche einen oder mehrere der genannten Nachteile vermindern oder beseitigen. Insbesondere ist es eine Aufgabe der Erfindung, eine Lösung bereitzustellen, die die Ammoniakbelastung innerhalb eines Tierstalls, insbesondere eines Schweinestalls, reduziert. Ferner ist es eine Aufgabe der Erfindung, eine Lösung bereitzustellen, die zuverlässiger und/oder robuster ausgebildet ist. Des Weiteren ist es eine Aufgabe der Erfindung, eine Lösung bereitzustellen, die die Wartbarkeit verbessert.

Diese Aufgabe wird gelöst durch eine Trennungsvorrichtung zur Bildung einer Standfläche für Nutztiere, insbesondere Schweine, und zur Emissionsreduktion in Ställen, insbesondere in Schweineställen, umfassend einen Grundrahmen, ein Ablaufelement mit zwei oder mehreren Ablaufrinnen, die jeweils ein Abflussende umfassen, und Schultern zwischen denen sich jeweils eine der zwei oder mehreren Ablaufrinnen orthogonal zu einer Ablaufrichtung erstreckt, ein flüssigkeitsdurchlässiges Endlosband mit einem Obertrum und einem Untertrum, wobei das Ablaufelement derart an dem Grundrahmen angeordnet ist, dass eine Ablaufrichtung der zwei oder mehreren Ablaufrinnen in Richtung des Abflussendes gerichtet ist und das Abflussende derart positioniert ist, dass eine aus diesem abfließende Flüssigkeit eine Ablaufquerrinne erreicht, wobei das Ablaufelement zwischen dem Obertrum und dem Untertrum angeordnet ist, und wobei das Obertrum auf mindestens einer Schulter aufliegt.

Der Grundrahmen bildet vorzugsweise eine zumindest teilweise geschlossene Umrandung, insbesondere eine geschlossene Umrandung. Ferner ist es bevorzugt, dass der Grundrahmen als Tragstruktur ausgebildet ist. Der Grundrahmen kann geeignete Befestigungselemente aufweisen, um das Ablaufelement zu befestigen. Beispielsweise kann der Grundrahmen ein Auflagerelement aufweisen, vorzugsweise zwei oder mehr Auflagerelemente aufweisen, auf denen das Ablaufelement angeordnet ist.

Die Ablaufquerrinne umfasst vorzugsweise Mittel zum Leiten einer Flüssigkeit insbesondere Flüssigkeitsleiter. Ferner kann diese ein, vorzugsweise innen liegendes, Rohr aufweisen. Die Ablaufquerrinne ist vorzugsweise rinnenförmig ausgebildet, wobei dies insbesondere bedeutet, dass diese als eine Rohrhälfte bzw. eine Halfpipe ausgebildet ist. Ferner kann die Ablaufquerrinne ein U- und/oder V-förmiges Profil aufweisen. Ferner ist es bevorzugt, dass die Ablaufquerrinne durch ein gebogenes und/oder gezogenes Blech ausgebildet ist. Die Ablaufquerrinne besteht vorzugsweise aus Metall, insbesondere Stahl, insbesondere aus einem nicht-rostenden Stahl, vorzugsweise Edelstahl, oder umfasst dieses bzw. diesen. Ferner vorzugsweise besteht die Ablaufquerrinne aus Kunststoff, insbesondere Faserverbundkunststoff, oder umfasst diesen.

Das Ablaufelement weist die zwei oder mehreren Ablaufrinnen auf. Unter einer Ablaufrinne ist insbesondere ein Element zu verstehen durch das eine Flüssigkeit fließen kann. Vorzugsweise ist die Ablaufrinne ein schmales und/oder lang gestrecktes Element. Die Ablaufrinnen sind insbesondere in vertikaler Richtung nach oben hin zumindest abschnittsweise, vorzugsweise vollständig, offen. Die Ablaufrinne erstreckt sich vorzugsweise von einem Sperrende zu einem Abflussende in einer Rinnenlängsrichtung. Die Rinnenlängsrichtung ist vorzugsweise im Wesentlichen parallel zu der Ablaufrichtung ausgerichtet. Das Sperrende ist vorzugsweise derart ausgebildet, dass eine sich in der Ablaufrinne befindliche Flüssigkeit bei horizontaler Ausrichtung der Ablaufrinne nicht ablaufen kann. Das Abflussende ist vorzugsweise derart ausgebildet, dass eine sich in der Ablaufrinne befindliche Flüssigkeit bei horizontaler Ausrichtung der Ablaufrinne und/oder bei hin zu dem Abflussende geneigter Ausrichtung der Ablaufrinne aus dieser heraustreten kann, was insbesondere bedeutet, dass die Flüssigkeit ablaufen und/oder abfließen kann. Die zwei oder mehr Ablaufrinnen sind in einer ersten bevorzugten Variante nicht fluidisch miteinander gekoppelt. In einer weiteren bevorzugten Variante befinden sich zumindest zwei der zwei oder mehreren Ablaufrinnen in einem fluidischen Kontakt. Ein Fluid kann beispielsweise von einer ersten Ablaufrinne hin zu einer zweiten Ablaufrinne der zwei oder mehreren Ablaufrinnen gelangen.

Orthogonal zu der Rinnenlängsrichtung und/oder der Ablaufrichtung weist die Ablaufrinne einen Rinnenquerschnitt auf. Der Rinnenquerschnitt kann halbkreisförmig, und/oder rechteckig, und/oder halbelliptischförmig, und/oder dreieckig sein. Wie im Folgenden noch näher erläutert wird, kann der Rinnenquerschnitt auch U-förmig und/oder V-förmig ausgebildet sein. Die Rinnenlängsrichtung und die Ablaufrichtung sind vorzugsweise parallel zueinander ausgerichtet.

Die zwei oder mehr Ablaufrinnen können aus Metall, insbesondere aus Stahl, insbesondere aus einem nicht-rostenden Stahl, vorzugsweise Edelstahl, bestehen oder dieses bzw. diesen umfassen. Insbesondere ist es bevorzugt, dass die Ablaufrinnen aus einem Stahlblechhalbzeug, insbesondere einem Edelstahlblechhalbzeug, hergestellt sind. Ferner können die zwei oder mehreren Ablaufrinnen aus Kunststoff bestehen oder diesen umfassen. Besonders bevorzugt werden Faserverbundkunststoffe eingesetzt. Die Ablaufrinnen sind vorzugsweise derart gestaltet, dass diese jeweils miteinander verbunden werden können, sodass eine Skalierbarkeit erreicht werden kann und die Breite des Ablaufelements ohne wesentliche konstruktive Anpassungen an eine veränderte Breite der Trennungsvorrichtung angepasst werden kann.

Die Ablaufrinnen erstrecken sich ferner zwischen Schultern. Die Erstreckung zwischen den Schultern ist orthogonal zu der Ablaufrichtung ausgerichtet. Vorzugsweise erstreckt sich jeweils eine Ablaufrinne zwischen zwei Schultern. Zwei benachbart zueinander angeordnete Ablaufrinnen weisen vorzugsweise zwischen sich eine gemeinsame Schulter auf.

Vorzugsweise ist die Erstreckung einer Ablaufrinne zwischen den Schultern orthogonal zu der Rinnenlängsrichtung ausgerichtet. Darüber hinaus ist es bevorzugt, dass die Erstreckung einer Ablaufrinne zwischen den Schultern orthogonal zu einer Rinnentiefe ausgerichtet ist. Die Rinnentiefe repräsentiert insbesondere die Richtung der Füllhöhe einer der zwei oder mehreren Ablaufrinnen. Die Schultern können durch die Ablaufrinnen gebildet werden. Zusätzlich oder alternativ können die Schultern durch ein zusätzliches Schulterelement gebildet werden. Vorzugsweise ist das Schulterelement an mindestens einer Ablaufrinne angeordnet, ferner vorzugsweise befestigt. Wie im Folgenden noch näher erläutert wird, kann die Schulter durch benachbarte Ablaufrinnen ausgebildet werden, beispielsweise indem ein Randbereich einer Ablaufrinne abgekantet und/oder abgebogen wird und/oder die zwei benachbarten Ablaufrinnen miteinander verschweißt werden.

In mindestens einer der zwei oder mehreren Ablaufrinnen ist vorzugsweise ein Füllstandssensor angeordnet. Der Füllstandssensor kann beispielsweise eine Verstopfung und/oder potenzielle Verstopfung in der bzw. den Ablaufrinnen selbst oder in einem nachgeschalteten Abflusssystem detektieren.

Das Endlosband weist das Obertrum und das Untertrum auf. Das Obertrum kann beispielsweise als Lasttrum und das Untertrum als Leertrum ausgebildet werden oder umgekehrt. Das Endlosband kann durch geeignete Elemente an der Trennungsvorrichtung zu einem Zugmitteltrieb ausgebildet werden, beispielsweise durch im Nachfolgenden erläuterte Umlenkeinheiten.

Das Endlosband ist flüssigkeitsdurchlässig ausgebildet, wobei das Endlosband insbesondere durchlässig für Urin und/oder Harn ausgebildet ist. Flüssigkeitsdurchlässig bedeutet insbesondere, dass eine sich auf dem Endlosband befindliche Flüssigkeit durch das Endlosband hindurch gelangen kann. Dies kann beispielsweise durch ein flüssigkeitsdurchlässiges Material, beispielsweise ein faseriges Material, erreicht werden. Ferner kann das Endlosband Durchgangsöffnungen aufweisen. Ferner kann die Flüssigkeitsdurchlässigkeit mittels eines mehrgliedrigen Endlosbands realisiert werden, wobei zwischen den Gliedern des derart ausgebildeten Endlosbands Abstände vorgesehen sind. Die Abstände können beispielsweise durch ein Spaltmaß zwischen den Gliedern realisiert werden. Besonders bevorzugt ist eine Ausbildung des Endlosbands als nicht biegeschlaffes Endlosband. Vorzugsweise ist das Endlosband derart ausgebildet, dass dieses für Kot von Tieren, insbesondere von Schweinen, im Wesentlichen undurchlässig ist.

Das Ablaufelement ist derart an dem Grundrahmen angeordnet, dass eine Ablaufrichtung der zwei oder mehreren Ablaufrinnen in Richtung des Abflussendes gerichtet ist. Die Ablaufrichtung ist insbesondere die Richtung, in die eine in einer der Ablaufrinnen befindliche Flüssigkeit fließt. Die zwei oder mehreren Ablaufrinnen sind vorzugsweise derart geneigt, dass eine in diesen befindliche Flüssigkeit in Richtung des jeweiligen Abflussendes fließt. Die im Vorherigen definierte Ablaufrichtung kann beispielsweise durch eine geneigte Anordnung der zwei oder mehreren Ablaufrinnen an dem Ablaufelement realisiert werden. Alternativ oder zusätzlich kann das Ablaufelement geneigt an dem Grundrahmen angeordnet werden, wobei dies vorzugsweise durch vertikal versetzt angeordnete Auflager und/oder im Folgenden erläuterte Querträger an dem Grundrahmen ermöglicht wird.

Der Grundrahmen kann auch Auflager und/oder Querträger in vertikal gleicher Höhe aufweisen, wobei die an den Auflagern und/oder Querträgern aufliegenden Elemente des Ablaufelements eine vertikal unterschiedliche Beabstandung zu den zwei oder mehreren Ablaufrinnen aufweisen. Die Schultern des Ablaufelements erstrecken sich vorzugsweise in horizontaler Richtung, sodass ein im Wesentlichen horizontal ausgerichtetes Obertrum im Wesentlichen vollständig auf den Schultern aufliegt. Horizontal ausgerichtete Schultern und geneigte Ablaufrinnen resultieren vorzugsweise darin, dass die Füllhöhe der Ablaufrinnen hin zu dem Abflussende zunimmt.

Ferner ist es bevorzugt, dass das Obertrum auf zwei oder mehr Schultern aufliegt. Ferner kann das Obertrum auf drei Schultern, und/oder auf vier Schultern, und/oder auf fünf Schultern, und/oder auf sechs Schultern, und/oder auf sieben Schultern, und/oder auf acht Schultern, und/oder auf neun Schultern, und/oder auf zehn Schultern aufliegen. In einer weiteren bevorzugten Ausbildung der Trennungsvorrichtung ist vorgesehen, dass das Obertrum auf mehr als 10 %, und/oder auf mehr als 20 %, und/oder auf mehr als 25 %, und/oder auf mehr als 50 %, und/oder auf mehr als 75 %, und/oder auf mehr als 90 % der vom Ablaufelement umfassten Schultern aufliegt.

Das Abflussende ist durch die Anordnung des Ablaufelements am Grundrahmen derart positioniert, dass eine aus dem Abflussende abfließende Flüssigkeit die Ablaufquerrinne erreicht und/oder in die Ablaufquerrinne fließt. Dies kann beispielsweise dadurch erreicht werden, dass das Abflussende in vertikaler Richtung über der Ablaufquerrinne positioniert ist. Insbesondere kann das Abflussende in vertikaler Richtung über einem in vertikaler Richtung unteren Ende der Ablaufquerrinne angeordnet sein. Ferner kann die Flüssigkeit von dem Abflussende hin zu der Ablaufquerrinne mittels geeigneter Leitungselemente fließen und/oder verbracht werden.

Die Anordnung des Ablaufelements zwischen dem Obertrum und dem Untertrum des Endlosbands resultiert insbesondere darin, dass eine durch das Obertrum fließende Flüssigkeit das Ablaufelement erreicht. Ferner wird durch die Positionierung des Ablaufelements zwischen dem Obertrum und dem Untertrum die Möglichkeit geschaffen, dass das Obertrum auf mindestens einer Schulter aufliegt. Das Obertrum dient insbesondere als Standfläche für Tiere. Das Obertrum ist infolgedessen mit nicht unwesentlichen Gewichtskräften belastet. Durch die Auflage des Obertrums auf mindestens einer Schulter, vorzugsweise auf zwei oder mehr Schultern, wird das Endlosband entlastet. Das Gewicht eines, zweier oder mehrerer Tiere auf der Trennungsvorrichtung wird zumindest teilweise durch mindestens eine Schulter und somit durch das Ablaufelement getragen.

Infolgedessen sind die Anforderungen an das Endlosband verändert, da die durch das Endlosband aufzunehmenden Gewichtskräfte von auf der Trennungsvorrichtung befindlichen Tieren homogener auf unter dem Obertrum des Endlosbands befindliche Auflager, hier die Schultern der Ablaufrinnen, verteilt werden. Das Endlosband kann beispielsweise mit einer anderen Härte ausgebildet werden, was den Lauf des Endlosbands auf den Mitteln zur Führung des Endlosbands verbessert. Ferner kann das Endlosband mit einer geringeren Dicke ausgebildet werden, so dass der Geradeauslauf verbessert ist. Daraus resultiert insbesondere ein geringerer Energieaufwand zum Betreiben des Endlosbands, woraus die Anforderungen an eine anzuschließende Antriebseinheit sinken. Ferner kann sich der Energieaufwand reduzieren.

Des Weiteren ist die Auswahl an geeigneten Endlosbändern erweitert, da die Anforderungen an Härte und Festigkeit reduziert sind. Folglich können solche Materialien für das Endlosband verwendet werden, die besonders das Tierwohl verbessern. Beispielsweise können weichere Materialien eingesetzt werden, die besonders vorteilhaft für die Hufe der Tiere sind.

Die Trennungsvorrichtung hat ferner den Vorteil, dass diese auf einer Ebene aufgestellt werden kann und keine Anforderungen hinsichtlich eines geneigten Untergrunds stellt. Dadurch sind die baulichen Maßnahmen gering bzw. nicht erhöht gegenüber einem konventionellen Stall.

Der hier beschriebenen Trennungsvorrichtung liegt unter anderem die Erkenntnis zu Grunde, dass das Endlosband ein Verschleißteil ist, jedoch ein Versagen des Endlosbands im Wesentlichen vollständig vermieden werden muss, da sich auf diesem befindliche Tiere im Versagensfall verletzen könnten. Infolgedessen wird das Endlosband üblicherweise derart robust ausgebildet und/oder entsprechende Wartungszyklen vorgesehen, dass ein Versagen ausgeschlossen wird.

Die im Vorherigen beschriebene Trennungsvorrichtung reduziert die Belastung des Endlosbands durch die als Auflager wirkenden Schultern entlang der Erstreckungsfläche des Obertrums, wodurch das Endlosband beispielsweise weniger überdimensioniert werden kann und die Wartungszyklen länger vorgesehen werden können. Ferner wird durch die Auflage auf den Schultern die Belastung homogener verteilt, wodurch die hier beschriebene Trennungsvorrichtung zuverlässig und robust ausgebildet ist.

Ferner ist die Wartbarkeit verbessert, da das Ablaufelement mit vergleichsweise geringem Aufwand in den Grundrahmen montier- und demontierbar ist. Ferner ist die Konstruktion vereinfacht, da zusätzlich zu den Rinnen keine weiteren Auflager oder dergleichen für das Endlosband erforderlich sind. Infolgedessen ist die beschriebene Trennungsvorrichtung weniger anfällig für Reparaturen.

Darüber hinaus kann das Tierwohl mit der im Vorherigen beschriebenen Trennungsvorrichtung dahingehend verbessert werden, dass ein mit einer solchen Trennungsvorrichtung ausgestatteter Stall eine größere Aufnahmekapazität für Beschäftigungsmaterial, wie beispielsweise Heu, Stroh, Luzerne und/oder Sägemehl aufweist. Dies begründet sich insbesondere dadurch, dass das Beschäftigungsmaterial auf der Trennungsvorrichtung mit dem Kot entsorgbar ist. Demzufolge wird kein Güllesystem aufgrund eines zu hohen Feststoffanteils in einer Gülle überlastet, was dazu führt, dass mehr Beschäftigungsmaterial eingebracht werden kann.

Eine bevorzugte Fortbildung der Trennungsvorrichtung sieht vor, dass diese einen Ablaufquerträger umfasst, wobei vorzugsweise der Ablaufquerträger als erstes Auflager für das Ablaufelement wirkt. Ferner ist es bevorzugt, dass der Grundrahmen einen Auflagerquerträger aufweist, wobei vorzugsweise der Auflagerquerträger als zweites Auflager für das Ablaufelement wirkt. Des Weiteren kann der Grundrahmen einen ersten Längsträger und/oder einen zweiten Längsträger umfassen, wobei der Ablaufquerträger und/oder der Auflagerquerträger an dem ersten Längsträger und/oder dem zweiten Längsträger angeordnet ist bzw. sind.

Der Ablaufquerträger ist vorzugsweise derart ausgebildet, dass dieser zumindest teilweise das Gewicht des Ablaufelements trägt bzw. tragen kann. Ferner ist der Ablaufquerträger vorzugsweise derart ausgebildet, dass dieser das Gewicht des Ablaufelements und zusätzlich das Gewicht von ein, zwei oder mehreren Tieren, insbesondere Schweinen, tragen kann. Der Ablaufquerträger kann beispielsweise derart bemessen sein, dass dieser ein Gewicht von größer 100 kg, größer 150 kg, größer 200 kg, größer 250 kg, größer 300 kg, größer 500 kg und/oder größer 1000 kg tragen kann.

Der Auflagerquerträger ist vorzugsweise entgegen der Ablaufrichtung von dem Ablaufquerträger beabstandet. Vorzugsweise ist der Auflagerquerträger in vertikaler Richtung auf der gleichen Höhe angeordnet wie der Ablaufquerträger. Ferner ist es bevorzugt, dass das Ablaufelement ein erstes Stützelement und/oder ein zweites Stützelement aufweist. Die Stützelemente verbinden vorzugsweise die Ablaufrinnen miteinander. Die Stützelemente sind vorzugsweise als Balken und/oder als Hohlprofile mit einer länglichen Ausbildung ausgebildet. Die Stützelemente erstrecken sich in ihrer Haupterstreckungsrichtung vorzugsweise parallel zu dem Ablaufquerträger und/oder Auflagerquerträger. In einer bevorzugten Ausführungsvariante sind die Stützelemente derart ausgebildet, dass diese an dem Ablaufquerträger und/oder dem Auflagerquerträger angeordnet werden können, vorzugsweise von diesen aufgenommen werden können.

Die Längsträger erstrecken sich vorzugsweise mit ihrer Haupterstreckungsrichtung im Wesentlichen parallel zur Ablaufrichtung. Der Ablaufquerträger und/oder der Auflagerquerträger erstrecken sich vorzugsweise orthogonal zu dem Längsträger bzw. den Längsträgern. Ferner vorzugsweise sind der Ablaufquerträger und/oder der Auflagerquerträger zwischen dem ersten Längsträger und dem zweiten Längsträger angeordnet.

Vorzugsweise weist der erste Längsträger und/oder der zweite Längsträger eine Ablauföffnung auf, die insbesondere als Durchgangsöffnung ausgebildet ist. Die Ablaufquerrinne mündet vorzugsweise in der Ablauföffnung, sodass eine von der Ablaufquerrinne aufgefangene Flüssigkeit durch die Ablauföffnung aus der Trennungsvorrichtung entweichen kann. Beispielsweise kann an der Ablauföffnung eine Entsorgung der Flüssigkeit vorgesehen werden. Die Ablauföffnung kann beispielsweise einen Durchmesser von 30 mm bis 50 mm aufweisen.

In einer bevorzugten Ausführungsvariante der Trennungsvorrichtung ist vorgesehen, dass das Endlosband als Modulband mit einer Vielzahl von aneinander angeordneten Modulen ausgebildet ist, und wobei das Endlosband einen Öffnungsgrad von 2 % bis 10 %, insbesondere 2 % bis 8%, bevorzugt 2 % bis 6 %, besonders bevorzugt von 2 % bis 6 %, insbesondere 3 % bis 5% aufweist. Ferner vorzugsweise weist das Modulband in einem im Wesentlichen geraden Abschnitt des Endlosbands ein Spaltmaß von 0,2 mm bis 1,0 mm, insbesondere 0,2 mm bis 0,8 mm, bevorzugt 0,2 mm bis 0,6 mm, weiter bevorzugt 0,2 mm bis 0,5 mm, insbesondere 0,3 mm bis 0,4 mm, vorzugsweise 0,34 mm bis 0,36 mm auf.

Der Öffnungsgrad ist insbesondere definiert als Verhältnis aus offenen Flächen und geschlossenen Flächen des Endlosbands. Eine offene Fläche ist beispielsweise ein Spalt oder eine Durchtrittöffnung, also ein Bereich durch den eine Flüssigkeit durch das Endlosband hindurchtreten kann. An den Umkehrpunkten des Endlosbands sowie in Bereichen des Endlosbands angrenzend an die Umkehrpunkte befindet sich das Endlosband in der Regel in einem nicht geraden Zustand, da es hier gebogen ist. In der Regel verändern sich in diesen Bereichen die Spaltmaße. Ein als Modulband ausgebildetes Endlosband hat den Vorteil eines spezifisch definierbaren Öffnungsgrads. Ferner zeichnet sich ein Modulband durch eine hohe Festigkeit und Langlebigkeit aus. Ferner kann das Modulband mit einfachen Mitteln als geeigneter Untergrund für Tiere ausgebildet werden, insbesondere rutschfest.

Die aneinander angeordneten Module weisen vorzugsweise eine Modullängsrichtung, eine Modulbreite und eine Moduldicke auf. Die Modullängsrichtung und die Modulbreite erstrecken sich insbesondere zwischen den Umkehrpunkten des Endlosbands, vorzugsweise in einer flächigen Ebene des Modulbands. Die Modullängsrichtung ist vorzugsweise orthogonal zu der Vorschubrichtung des Endlosbands ausgerichtet. Die Modulbreite ist vorzugsweise parallel zur der Vorschubrichtung des Endlosbands ausgerichtet.

In einer besonders vorteilhaften Ausgestaltung weist ein Modul eine Moduldicke von kleiner gleich 20 mm, bevorzugt kleiner gleich 15 mm, weiter bevorzugt kleiner gleich 14 mm, weiter bevorzugt kleiner gleich 13 mm, besonders bevorzugt kleiner gleich 12 mm und besonders bevorzugt kleiner gleich 11 mm und vorzugsweise kleiner gleich 10 mm auf. Die Module sind an ihren Längsseiten, die parallel zu der Modullängsrichtung verlaufen, mit jeweils weiteren Modulen verbindbar, vorzugsweise gelenkig verbindbar. Benachbart angeordnete Module weisen vorzugsweise eine Gelenkverbindung auf. Eine Gelenkachse der Gelenkverbindung ist vorzugsweise im Wesentlichen mittig bezogen auf die Moduldicke angeordnet. Die Gelenkverbindung ist vorzugsweise zahnartig ausgeführt und/oder umfasst Gelenkzähne. Die Module sind insbesondere derart miteinander verbunden, dass die Gelenkzähne eines ersten Moduls in einen Zahngrund eines zweiten Moduls fassen. Die Zähne weisen vorzugsweise parallel zur Modullängsrichtung eine Durchgangsöffnung und/oder Ausnehmungen auf. Die Zähne und/oder die Durchgangsöffnungen und/oder Ausnehmungen sind vorzugsweise derart angeordnet und ausgebildet, dass die Durchgangsöffnungen von zwei benachbarten Modulen eine gemeinsame Durchtrittsachse aufweisen. In diese Durchgangsöffnungen mit gemeinsamer Durchtrittsachse kann beispielsweise ein Stab angeordnet werden, sodass die benachbarten Module miteinander verbunden werden.

Das Material des Endlosbands ist vorzugsweise flammhemmend und/oder antistatisch. Das Endlosband besteht vorzugsweise aus Kunststoff oder umfasst diesen. Insbesondere ist es bevorzugt, dass der Kunststoff aus der Gruppe ausgewählt ist bestehend aus Polyethylen, Polypropylen, Polyoxymethylen, Polyamide, Polyphthalamide, Polybutylenterephthalat und Polyurethane. In einer vorteilhaften Weiterbildung weist der verwendete Kunststoff Fasern auf.

In Bereichen angrenzend an die Umkehrpunkte des Endlosbandes sind vorzugsweise Schutzelemente angeordnet. Die Schutzelemente verhindern, dass ein Tier auf den Bereich der gegebenenfalls nicht oder gering belastbaren Umkehrpunkte tritt. Die Schutzelemente können beispielsweise als Modulbandauflage und/oder Blech ausgebildet sein. Ferner können die Schutzelemente Bürsten aufweisen, um Unebenheiten auszugleichen.

Gemäß einer weiteren bevorzugten Ausführungsvariante der Trennungsvorrichtung ist vorgesehen, dass die Ablaufquerrinne an dem Ablaufelement angeordnet ist, wobei eine sich in den zwei oder mehreren Ablaufrinnen befindliche Flüssigkeit in die Ablaufquerrinne fließt. Ferner kann die Ablaufquerrinne an dem Ablaufquerträger angeordnet sein und/oder die Ablaufquerrinne integral mit dem Ablaufquerträger ausgebildet sein. Darüber hinaus ist es bevorzugt, dass die Ablaufquerrinne geneigt angeordnet ist. Vorzugsweise weist der Ablaufquerträger eine rinnenförmige Vertiefung auf, die die Ablaufquerrinne ausbildet.

Eine weitere bevorzugte Fortbildung der Trennungsvorrichtung zeichnet sich dadurch aus, dass der im Wesentlichen ebene Abschnitt des Obertrums als Standfläche für Nutztiere, insbesondere Schweine, ausgebildet ist und sich das Ablaufelement vollständig unter der Standfläche erstreckt. Eine derartige Ausbildung ermöglicht das im Wesentlichen vollständige Auffangen von auf dem Obertrum abgesetzter Flüssigkeit.

Das Endlosband wird vorzugsweise von einem Getriebemotor, insbesondere einem elektrischen Getriebemotor, angetrieben. Die Vorschubgeschwindigkeit des Endlosbands kann zwischen 1 m/min und 10 m/min, bevorzugt zwischen 1 m/min und 5 m/min, besonders bevorzugt zwischen 1,5 m/min und 2,5 m/min betragen.

In einer bevorzugten Ausführungsvariante der Trennungsvorrichtung ist vorgesehen, dass sich der Grundrahmen von einem ersten Ende zu einem zweiten Ende erstreckt und an dem ersten Ende eine erste Umlenkeinheit und an dem zweiten Ende eine zweite Umlenkeinheit angeordnet ist, und das Endlosband die erste Umlenkeinheit und die zweite Umlenkeinheit umschlingt. Die Umkehrpunkte des Endlosbandes sind somit vorzugsweise an den Umlenkeinheiten positioniert. Die erste Umlenkeinheit und/oder die zweite Umlenkeinheit weisen vorzugsweise eine Antriebswelle auf. Die Antriebswelle kann beispielsweise als Quadratrohr mit einem rechteckigen und/oder quadratischen Querschnitt sein.

Die Antriebswelle kann ein Ritzel für einen Zahnradantrieb und/oder eine Antriebsscheibe für einen Riementrieb umfassen. Die Antriebswelle ist vorzugsweise teleskopierbar. Die erste Umlenkeinheit und/oder die zweite Umlenkeinheit können Kopplungselemente umfassen, die angeordnet und ausgebildet sind, eine angetriebene Umlenkeinheit mit einer dritten Umlenkeinheit einer benachbarten Trennungsvorrichtung zu koppeln. Die Kopplung kann beispielsweise eine Kettenkupplung umfassen, um insbesondere Spiel auszugleichen. Dies bietet den Vorteil, dass lediglich eine einzelne Trennungsvorrichtung innerhalb eines Stalls angetrieben werden muss und die weiteren Trennungsvorrichtungen mittels der angetriebenen Trennungsvorrichtung angetrieben werden.

Ferner vorzugsweise umfasst die erste und/oder zweite Umlenkeinheit einen Antrieb. Der Antrieb kann beispielsweise als Getriebemotor ausgebildet sein oder diesen umfassen. Der Antrieb kann integral beispielsweise als Rollenmotor oder Rohrmotor vorgesehen werden oder extern an ein Ende der Antriebswelle angreifen. Die von dem Endlosband ausgeführte Vorschubrichtung ist vorzugsweise parallel zu der Ablaufrichtung. Darüber hinaus ist es besonders bevorzugt, dass die Vorschubrichtung und die Ablaufrichtung gleichgerichtet sind. Eine der Umlenkeinheiten kann insbesondere angetrieben sein, wobei die andere passiv zur Umlenkung angeordnet ist.

In einer weiteren besonders bevorzugten Ausführungsvariante der Trennungsvorrichtung ist vorgesehen, dass die zwei oder mehreren Ablaufrinnen jeweils orthogonal zu der Ablaufrichtung einen Rinnenquerschnitt aufweisen und der Rinnenquerschnitt ein U-förmiges Profil und/oder ein V-förmiges Profil aufweist. Vorzugsweise weisen die zwei oder mehreren Ablaufrinnen jeweils zwei Schenkel auf, die sich von einem Rinnengrund hinweg erstrecken. Vorzugsweise erstrecken sich die dem Rinnengrund abgewandten Schenkelenden in vertikaler Richtung vom Rinnengrund hinweg.

Ferner ist bevorzugt, dass das U-förmige Profil einen Radius von kleiner 400 mm, und/oder kleiner 300 mm, und/oder kleiner 250 mm, und/oder kleiner 200 mm, und/oder kleiner 194 mm, und/oder kleiner 190 mm, und/oder kleiner 175 mm, und/oder kleiner 150 mm, und/oder kleiner 100 mm, und/oder kleiner 75 mm, und/oder kleiner 50 mm, und/oder kleiner 25 mm, und/oder kleiner 15 mm, und/oder kleiner 10 mm, und/oder kleiner 5 mm aufweist.

Darüber hinaus kann das V-förmige Profil einen inneren Öffnungswinkel von kleiner 180 Bogengrad, und/oder kleiner 170 Bogengrad, und/oder kleiner 162 Bogengrad, und/oder kleiner 150 Bogengrad, und/oder kleiner 140 Bogengrad, und/oder kleiner 130 Bogengrad, und/oder kleiner 120 Bogengrad, und/oder kleiner 100 Bogengrad, und/oder kleiner 90 Bogengrad, und/oder kleiner 45 Bogengrad aufweisen.

Ferner ist es bevorzugt, dass die zwei oder mehreren Ablaufrinnen in Ablaufrichtung eine Sicke aufweisen, wobei die Sicke ferner vorzugsweise an einem Sickengrund einen Radius und/oder ein gekantetes Profil aufweist. Insbesondere sind solche Profile bevorzugt, in denen sich eine Flüssigkeit mit möglichst kleiner Oberfläche sammelt bzw. die Flüssigkeit gebündelt wird. Mit einem solchen Profil kann die Fließgeschwindigkeit positiv beeinflusst werden. Ferner ist die Geruchsbelastung geringer. Des Weiteren resultiert eine verringerte Verdunstungsfläche.

Gemäß einer weiteren bevorzugten Ausführungsvariante der Trennungsvorrichtung ist vorgesehen, dass eine Schulter zwischen einer ersten Ablaufrinne der zwei oder mehreren Ablaufrinnen und einer zweiten Ablaufrinne der zwei oder mehreren Ablaufrinnen durch einen ersten Randabschnitt der ersten Ablaufrinne und einen zweiten Randabschnitt der zweiten Ablaufrinne gebildet wird. Insbesondere kann der erste Randabschnitt über dem zweiten Randabschnitt angeordnet sein, wobei der erste Randabschnitt und/oder der zweite Randabschnitt entlang einer Längsrichtung, insbesondere der Rinnenlängsrichtung, abgeknickt und/oder abgebogen ist bzw. sind. Der erste Randabschnitt und/oder der zweite Randabschnitt sind vorzugsweise in Rinnenlängsrichtung ausgebildet. Der erste Randabschnitt ist vorzugsweise mit dem zweiten Randabschnitt verbunden. Diese Verbindung kann stoff- oder kraftschlüssig erfolgen. Insbesondere können die Randabschnitte miteinander verschweißt sein.

Eine weitere bevorzugte Fortbildung der Trennungsvorrichtung zeichnet sich dadurch aus, dass eine erste äußere Ablaufrinne der zwei oder mehreren Ablaufrinnen mit einem ersten äußeren Randabschnitt dem ersten Längsträger zugewandt ist und eine zweite äußere Ablaufrinne der zwei oder mehreren Ablaufrinnen mit einem zweiten äußeren Randabschnitt dem zweiten Längsträger zugewandt ist, und der erste äußere Randabschnitt und/oder der zweite äußere Randabschnitt angeordnet und ausgebildet ist bzw. sind, auf dem ersten Längsträger und/oder dem zweiten Längsträger aufzuliegen, wobei vorzugsweise der erste äußere Randabschnitt und/oder der zweite äußere Randabschnitt abgeknickt und/oder umgebogen sind. Die auf dem Längsträger angeordneten Randabschnitte stützen das Ablaufelement an dem Grundrahmen ab, sodass die Stabilität erhöht wird. Es besteht die Möglichkeit, dass das Ablaufelement in den Grundrahmen eingelegt ist, wobei eine aktive Befestigung gegebenenfalls nicht erforderlich ist.

In einer weiteren besonders bevorzugten Fortbildung der Trennungsvorrichtung ist vorgesehen, dass diese einen Kotabstreifer umfasst. Der Kotabstreifer wirkt vorzugsweise an dem Endlosband an einem der Umkehrpunkte des Endlosbandes und/oder an Bereichen angrenzend an einen der Umkehrpunkte. Insbesondere ist es bevorzugt, dass der Kotabstreifer derart ausgebildet ist, dass dieser einen Restkot auf dem Endlosband belässt. Die kann beispielsweise mittels einer Federkraftbeaufschlagung realisiert werden. Durch den Restkot auf dem Endlosband nehmen Tiere, insbesondere Schweine, die Trennungsvorrichtung als bevorzugten Bereich zum Abkoten wahr und halten den Rest des Stalls oder der Bewegungsbereiche bevorzugt kotfrei.

In einer bevorzugten Ausführungsvariante der Trennungsvorrichtung ist vorgesehen, dass diese eine Steuerungsvorrichtung umfasst, die angeordnet und ausgebildet ist, einen Antrieb des Endlosbandes zu steuern. Ferner vorzugsweise umfasst die Trennungsvorrichtung mindestens einen Sensor, ausgewählt aus der Gruppe bestehend aus Drucksensor, Gewichtssensor, Feuchtigkeitssensor, ph-Wertsensor, Leitwertsensor, Durchflussmengensensor, Präsenzsensor, insbesondere Lichtschranke, Bewegungsmelder und Kamera, Ultraschallsensor, transponderbasierter Sensor, Ammoniakgehaltsensor, Luftfeuchtigkeitssensor, und Temperatursensor, und wobei die Steuerungsvorrichtung angeordnet und ausgebildet ist, in Abhängigkeit eines oder mehrerer Sensorsignale einer oder mehrerer der Sensoren, den Antrieb zu steuern. Der transponderbasierte Sensor kann beispielsweise als RFID-Chip und/oder als Ohrmarke ausgebildet sein. Ferner ist es bevorzugt, dass die Steuerungsvorrichtung den Antrieb tageszeitabhängig, und/oder sensorgesteuert, und/oder in Abhängigkeit von der Anwesenheit von Tieren steuert.

Gemäß einer weiteren bevorzugten Ausführungsvariante der Trennungsvorrichtung ist vorgesehen, dass die Trennungsvorrichtung mindestens eine Reinigungsdüse umfasst, die angeordnet und ausgebildet ist, eine Flüssigkeit auf das Untertrum zu fördern, wobei vorzugsweise die Reinigungsdüse an dem Ablaufelement angeordnet ist.

Gemäß einer weiteren bevorzugten Ausführungsvariante der Trennungsvorrichtung ist vorgesehen, dass die Trennungsvorrichtung mindestens eine Reinigungsdüse umfasst. die angeordnet und ausgebildet ist, eine Flüssigkeit auf die Unterseite des Obertrums zu fördern. Diese Reinigungsdüse kann zusätzlich zu einer Reinigungsdüse vorgesehen sein, die angeordnet und ausgebildet ist, eine Flüssigkeit auf das Untertrum zu fördern. Es kann auch eine (einzige) Reinigungsdüse vorgesehen sein, die angeordnet und ausgebildet ist, eine Flüssigkeit sowohl auf das Untertrum zu fördern als auch eine Flüssigkeit auf die Unterseite des Obertrums zu fördern.

Ferner vorzugsweise ist die Reinigungsdüse an der nicht angetriebenen Umlenkeinheit oder zumindest im Wesentlichen in der Nähe der Umlenkeinheit und vorzugsweise unterhalb des Obertrums angeordnet. Hierdurch können Feststoffbestandteile aus den Fugen des über der Düse sich bewegenden Obertrums entfernt und über die Ablaufrinne abgeführt werden und/oder sich in den Kanälen abgelagerten Feststoffbestandteile abgespült werden. Dabei ist die Förder- bzw. Strahlrichtung der Reinigungsdüse vorzugsweise derart ausgerichtet, dass eine austretende Flüssigkeit mit einer ersten Richtungskomponente in Richtung des Obertrums zeigt und ferner vorzugsweise mit einer zweiten Richtungskomponente in Richtung der Förderrichtung des Obertrums zeigt.

Darüber hinaus kann der Grundrahmen ein, zwei oder mehrere Stützfüße aufweisen. Insbesondere ist es bevorzugt, dass die Stützfüße derart angeordnet sind, dass die Lage des Grundrahmens gegenüber einer Horizontalen einstellbar ist. Die Stützfüße weisen hierfür beispielsweise einen fest an dem Grundrahmen angeordnetes Festelement und ein an dem Festelement beweglich angeordnetes Einstellelement auf. Das Einstellelement kann beispielsweise teleskopierbar sein, sodass dieses aus dem Festelement heraus bewegt werden kann. Die Befestigung des Einstellelements an dem Festelement erfolgt beispielsweise über ein Einrastsystem. Ferner kann an dem bzw. den Stützfüßen ein Kugelgelenk angeordnet werden, um eine Einstellung des Grundrahmens in vertikaler Höhe über einem Stallboden zu ermöglichen.

Die Trennungsvorrichtung umfasst vorzugsweise Aufnahmen zur Anordnung von Transportmitteln. Beispielsweise kann die Transportvorrichtung Gewindeöffnungen aufweisen, in die Transportösen einschraubbar sind.

Gemäß einem weiteren Aspekt wird die eingangs genannte Aufgabe gelöst durch einen Tierstall, insbesondere einen Schweinestall, umfassend mindestens eine Tierhaltebucht, eine in der Tierhaltebucht angeordnete Trennungsvorrichtung nach einer der im Vorherigen beschriebenen Ausführungsvarianten, und wobei die Trennungsvorrichtung derart angeordnet ist, dass eine Förderrichtung des Obertrums gerichtet ist in Richtung eines Kontrollgangs, und/oder eines Entsorgungsgangs, und/oder eines Begrenzungselements. Vorzugsweise erstreckt sich die Trennungsvorrichtung über die gesamte Breite der Tierhaltebucht.

Die Tierhaltebucht erstreckt sich vorzugsweise in Längsrichtung von einem ersten Buchtende zu einem zweiten Buchtende. Vorzugsweise ist die Trennungsvorrichtung in einem Bereich angrenzend an das zweite Buchtende angeordnet. Ferner vorzugsweise ist das erste Buchtende von der Trennungsvorrichtung 5 Meter bis 7 Meter, vorzugsweise 6 Meter bis 6,8 Meter beabstandet. Orthogonal zur Längsrichtung erstreckt sich die Tierhaltebucht vorzugsweise in Breitenrichtung 2 Meter bis 3 Meter, insbesondere 2,4 Meter bis 2,5 Meter. Die Vorschubrichtung des Endlosbandes der Trennungsvorrichtung ist vorzugsweise parallel zur Längsrichtung ausgerichtet. Es hat sich ferner als vorteilhaft herausgestellt, dass sich die Trennungsvorrichtung im Wesentlichen über die gesamte Breitenrichtung erstreckt.

In einer bevorzugten Ausführungsvariante des Tierstalls ist vorgesehen, dass dieser einen Entsorgungsgang umfasst, wobei eine Förderebene des Obertrums im Wesentlichen in der gleichen Ebene angeordnet ist wie der Kontrollgang. Ferner ist es bevorzugt, dass der Entsorgungsgang in vertikaler Richtung unter dem Kontrollgang angeordnet ist, und der Entsorgungsgang und das Endlosband derart angeordnet sind, dass auf dem Endlosband geförderter Kot in den Entsorgungsgang gefördert wird.

Gemäß einer weiteren bevorzugten Ausführungsvariante des Tierstalls ist vorgesehen, dass dieser eine erste Tierhaltebucht mit einer ersten Trennungsvorrichtung und eine zweite Tierhaltebucht mit einer zweiten Trennungsvorrichtung umfasst, wobei die erste Trennungsvorrichtung benachbart zu der zweiten Trennungsvorrichtung angeordnet ist. Darüber hinaus kann der Tierstall eine dritte Tierhaltebucht mit einer dritten Trennungsvorrichtung und eine vierte Tierhaltebucht mit einer vierten Trennungsvorrichtung aufweisen, wobei die dritte Trennungsvorrichtung benachbart zu der vierten Trennungsvorrichtung angeordnet ist, und die erste Trennungsvorrichtung und die zweite Trennungsvorrichtung an eine erste Seite des Kontrollgangs angrenzen und die dritte Trennungsvorrichtung und die vierte Trennungsvorrichtung an eine zweite der ersten gegenüberliegenden Seite des Kontrollgangs angrenzen.

Ferner können die erste Trennungsvorrichtung und die zweite Trennungsvorrichtung an den Kontrollgang angrenzen und die dritte Trennungsvorrichtung und die vierte Trennungsvorrichtung an einen zweiten Kontrollgang angrenzen, wobei vorzugsweise die den Trennungsvorrichtungen abgewandten Seiten der ersten und dritten Tierhaltebucht aneinander angeordnet sind und/oder die den Trennungsvorrichtungen abgewandten Seiten der zweiten und vierten Tierhaltebucht aneinander angeordnet sind.

In einer bevorzugten Ausführungsvariante des Tierstalls ist ferner vorgesehen, dass ein Antrieb das Endlosband der ersten Trennungsvorrichtung antreibt und das Endlosband der zweiten Trennungsvorrichtung mit dem Endlosband der ersten Trennungsvorrichtung derart gekoppelt ist, dass das Endlosband der zweiten Trennungsvorrichtung durch das Endlosband der ersten Trennungsvorrichtung angetrieben wird. Vorzugsweise umfasst die erste Trennungsvorrichtung und/oder die zweite Trennungsvorrichtung für die im Vorherigen genannte Kopplung Kopplungselemente. Ferner vorzugsweise umfasst der Tierstall acht oder 16, vorzugsweise mehr als 8 oder mehr als 16, Trennungsvorrichtungen, deren Endlosbänder von einem einzigen Antrieb angetrieben werden. Insbesondere ist es bevorzugt, dass ein einzelner Antrieb die Endlosbänder von zwei oder mehr Trennungsvorrichtungen antreibt. Der Tierstall umfasst vorzugsweise eine Vielzahl an Tierhaltebuchten und/oder Trennungsvorrichtungen.

Eine weitere bevorzugte Fortbildung des Tierstalls zeichnet sich dadurch aus, dass dieser ein in dem Entsorgungsgang angeordnetes Fördermittel zum Fördern von Kot umfasst. Dieses Fördermittel kann beispielsweise als Förderschnecke, Förderband und/oder als Kotschieber ausgebildet sein. Ferner kann eine Tränke derart angeordnet sein, dass die Tränke von der Trennungsvorrichtung aus für ein Tier erreichbar ist und/oder die Tränke in einem an die Trennungsvorrichtung angrenzenden Abschnitt der Tierhaltebucht angeordnet ist und/oder die Tränke im Abschnitt der Trennungsvorrichtung angebracht ist.

Vorzugsweise ist zwischen der Tierhaltebucht und dem Kontrollgang ein Begrenzungselement, beispielsweise eine Begrenzungswand und/oder ein Begrenzungsgatter, vorgesehen. Zwischen der Trennungsvorrichtung und dem Kontrollgang kann derart eine Entsorgungsöffnung angeordnet sein, dass auf dem Endlosband geförderter Kot in den Entsorgungsgang gelangt. Die Entsorgungsöffnung weist in vertikaler Richtung vorzugsweise eine lichte Höhe von kleiner 2 cm, von kleiner 3 cm, von kleiner 5 cm, von kleiner 10 cm oder größer 10 cm auf. Darüber hinaus ist es bevorzugt, dass die lichte Höhe der Entsorgungsöffnung einstellbar ist, wobei dies insbesondere bei der Haltung von heranwachsenden Tieren vorteilhaft ist. Ferner ist es bevorzugt, dass die lichte Höhe der Entsorgungsöffnung mit einer Ferkelschutzblende verringert wird, sodass ein Ferkel daran gehindert wird, in den Entsorgungsgang zu gelangen.

Der Tierstall umfasst vorzugsweise ein Flüssigkeitsabführungssystem. Vorzugsweise ist dieses als Rohrleitungssystem ausgebildet. Ferner kann der Tierstall Flüssigkeitszwischenspeicher umfassen, die die von der Trennungsvorrichtung gesammelte Flüssigkeit zwischenspeichern und mittels eines Tanks und/oder Pumpe entleerbar ist. Die Rohrleitungen weisen vorzugsweise ein Gefälle von 1 % auf. Ferner kann das Rohrleitungssystem an eine Pumpe angeschlossen sein, wodurch gegebenenfalls das Gefälle nicht erforderlich ist.

Ferner ist es bevorzugt, dass der Tierstall mindestens einen Stallsensor aufweist, ausgewählt aus der Gruppe bestehend aus Drucksensor, Gewichtssensor, Feuchtigkeitssensor, ph-Wertsensor, Leitwertsensor, Durchflussmengensensor, Präsenzsensor, insbesondere Lichtschranke, Bewegungsmelder und Kamera, Ultraschallsensor, transponderbasierter Sensor, Ammoniakgehaltsensor, Luftfeuchtigkeitssensor, und Temperatursensor. Der mindestens eine Stallsensor kann mit der Steuerungsvorrichtung des Antriebs der Trennungsvorrichtung gekoppelt sein. Ferner kann an der Trennungsvorrichtung eine Kommunikationsschnittstelle angeordnet sein, um mit dem Stallsensor zu kommunizieren.

Gemäß einem weiteren Aspekt wird die eingangs genannte Aufgabe gelöst durch ein Verfahren zur Herstellung einer Trennungsvorrichtung zur Trennung von Kot und Urin in einem Tierstall, umfassend Bereitstellen eines Grundrahmens mit einem Ablaufquerträger, Anordnen eines Ablaufelements mit einer Ablaufrinne, die ein Abflussende aufweist, und zwei Schultern zwischen denen sich die Ablaufrinne orthogonal zu einer Ablaufrichtung erstreckt, Anordnen eines flüssigkeitsdurchlässigen Endlosbands mit einem Obertrum und einem Untertrum an dem Grundrahmen, sodass das Ablaufelement zwischen dem Obertrum und dem Untertrum angeordnet ist, Befestigen des Ablaufelements an dem Grundrahmen, sodass das Abflussende an dem Ablaufquerträger angeordnet ist, wobei die Ablaufrinnen eine Neigung in Richtung der Abflussrichtung aufweisen, und die einer Standfläche für die Tiere abgewandte Unterseite des Obertrums zumindest abschnittsweise auf mindestens einer Schulter des Ablaufelements aufliegt.

Gemäß einem weiteren Aspekt wird die eingangs genannte Aufgabe gelöst durch ein Verfahren zur Trennung von Kot und Urin in einem Tierstall, umfassend Bereitstellen eines beweglichen und flüssigkeitsdurchlässigen Bodens, Abstützen des Bodens auf Ablaufrinnen, Auffangen von Flüssigkeit in den Ablaufrinnen, Abführen der Flüssigkeit in Längsrichtung der Ablaufrinnen und anschließend in Querrichtung. Vorzugsweise umfasst das Verfahren den Schritt Sammeln von Kot auf dem beweglichen Boden, wobei der Kot vorzugsweise gefördert wird.

Gemäß einem weiteren Aspekt wird die eingangs genannte Aufgabe gelöst durch ein Verfahren zur Trennung von Kot und Urin in einem Tierstall, umfassend Bereitstellen einer Trennungsvorrichtung nach mindestens einer der im Vorherigen genannten Ausführungsvarianten, Ansteuern eines Antriebs des Endlosbands, wobei das Endlosband angetrieben wird in Abhängigkeit von vordefinierten Zyklen, und/oder Tages- und/oder Nachtzeiten, und/oder Sensorsignalen, die insbesondere repräsentieren Druckwerte, und/oder Gewichtswerte, und/oder Feuchtigkeitswerte, und/oder ph-Werte, und/oder Leitwerte, und/oder Durchflussmengenwerte, und/oder Ammoniakgehaltswerte, und/oder Temperaturwerte, und/oder Ansteuern des Antriebs und/oder des Kotabstreifers derart, dass ein Restkot auf dem Endlosband verbleibt.

Das Verfahren und seine möglichen Fortbildungen weisen Merkmale bzw. Verfahrensschritte auf, die sie insbesondere dafür geeignet machen, für eine hier beschriebene Trennungsvorrichtung und ihre Fortbildungen verwendet zu werden. Für weitere Vorteile, Ausführungsvarianten und Ausführungsdetails dieser weiteren Aspekte und ihrer möglichen Fortbildungen wird auch auf die zuvor erfolgte Beschreibung zu den entsprechenden Merkmalen und Fortbildungen der Trennungsvorrichtung verwiesen.

Bevorzugte Ausführungsbeispiele werden exemplarisch anhand der beiliegenden Figuren erläutert. Es zeigen:
- Fig. 1:: eine schematische, dreidimensionale Ansicht einer beispielhaften Ausführungsform einer Trennungsvorrichtung;
- Fig. 2:: eine schematische Explosionszeichnung der Trennungsvorrichtung aus Fig. 1;
- Fig. 3:: eine schematische, zweidimensionale Seitenansicht der Trennungsvorrichtung aus Fig. 1,
- Fig. 4:: eine; schematische, zweidimensionale Stirnansicht der Trennungsvorrichtung aus Fig. 1
- Fig. 5:: eine schematische, dreidimensionale Ansicht einer beispielhaften Ausführungsform eines Ablaufelements;
- Fig. 6:: eine schematische, zweidimensionale Seitenansicht des Ablaufelements aus Fig. 5;
- Fig. 7:: eine schematische, zweidimensionale Stirnansicht des Ablaufelements aus Fig. 5;
- Fig. 8:: schematische, zweidimensionale Detailansichten von Ablaufrinnen des in Fig. 5 gezeigten Ablaufelements;
- Fig. 9:: eine schematische, dreidimensionale Ansicht eines Tierstalls mit einer Mehrzahl von in Fig. 1 gezeigten Trennungsvorrichtungen;
- Fig. 10:: ein schematisches Ablaufdiagramm einer beispielhaften Ausführungsform des Verfahrens zur Trennung von Kot und Urin in einem Tierstall.

In den Figuren sind gleiche oder im Wesentlichen funktionsgleiche bzw. -ähnliche Elemente mit den gleichen Bezugszeichen bezeichnet.

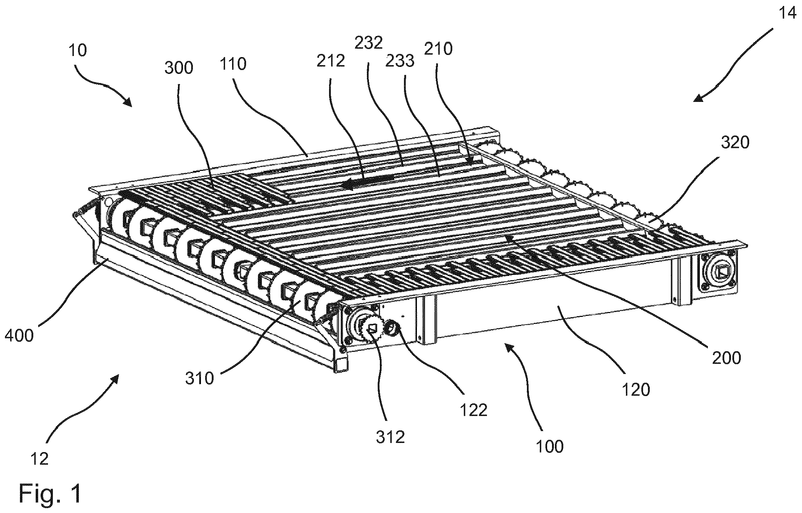

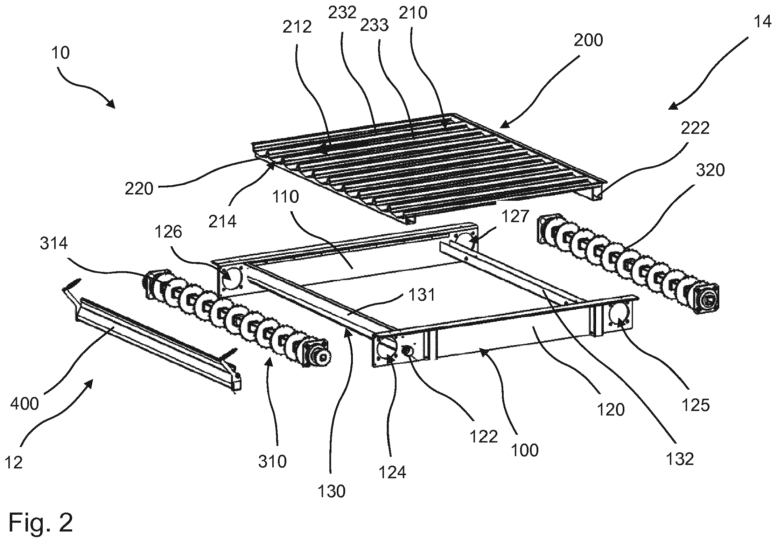

Fig. 1 zeigt eine schematische, dreidimensionale Ansicht einer beispielhaften Ausführungsform einer Trennungsvorrichtung. Die Trennungsvorrichtung 10 erstreckt sich von einem ersten Ende 12 hin zu einem zweiten Ende 14. Die Trennungsvorrichtung 10 umfasst einen Grundrahmen 100, in den ein Ablaufelement 200 eingesetzt ist. Der Grundrahmen 100 wird gebildet durch einen ersten Längsträger 110, einen zweiten Längsträger 120 sowie einen in Fig. 2 gezeigten Ablaufquerträger 130 und einen Auflagerquerträger 132. Der Ablaufquerträger 130 und der Auflagerquerträger 132 sind im Wesentlichen parallel angeordnet. Ebenfalls sind die Längsträger 110, 120 im Wesentlichen parallel zueinander angeordnet. Die Längsträger 110, 120 sowie die Querträger 130, 132 sind im rechten Winkel zueinander angeordnet.

In den durch den ersten Längsträger 110, zweiten Längsträger 120, den Ablaufquerträger 130 und den Auflagerquerträger 132 gebildeten Grundrahmen 100 ist das Ablaufelement 200 eingesetzt. Das Ablaufelement 200 umfasst eine Vielzahl an Ablaufrinnen 210, wobei die Vielzahl an Ablaufrinnen durch einen ersten Stützträger 220 und einen zweiten Stützträger 222 miteinander verbunden sind. Repräsentativ für die Mehrzahl an Ablaufrinnen wird die Struktur der Ablaufrinne 210 hier exemplarisch erläutert. Die Ablaufrinne 210 wird durch eine erste Schulter 232 und eine zweite Schulter 233 umgeben. Jede der Ablaufrinnen erstreckt sich von einer ersten Seite des Ablaufelements, die dem ersten Ende 12 der Trennungsvorrichtung 10 zugewandt ist, hin zu einer zweiten Seite, die dem zweiten Ende 14 der Trennungsvorrichtung 10 zugewandt ist. Die Ablaufrinnen 210 sind derart ausgebildet, dass in diesen eine Flüssigkeit fließen kann. Das Ablaufelement 200 sowie die Ablaufrinnen 210 sind derart ausgebildet, dass bei ordnungsgemäßer Anordnung des Ablaufelements 200 an dem Grundrahmen 100 eine Ablaufrichtung 212 definiert wird. Bei ordnungsgemäßer Anordnung des Ablaufelements weisen die Ablaufrinnen 210 eine Neigung zur Horizontalen auf. Infolge dessen fließt eine Flüssigkeit in Richtung der mit einem Pfeil gekennzeichneten Ablaufrichtung 212 hin zu einem Abflussende 214.

In einem Bereich angrenzend an die jeweiligen Enden der Längsträger sind Durchtrittsöffnungen 124, 125, 126, 127 angeordnet. Die Durchtrittsöffnungen 124 - 127 sind derart ausgebildet, dass an bzw. in diesen eine erste Umlenkeinheit 310 und eine zweite Umlenkeinheit 320 angeordnet werden kann. Es ist besonders bevorzugt, dass der Ablaufquerträger 130 und der Auflagerquerträger 132 innenseitig von den Umlenkeinheiten 310, 320 angeordnet sind. Die Umlenkeinheiten 310, 320 sind derart angeordnet und ausgebildet, dass diese ein Endlosband 300 führen können. Das in der Fig. 1 gebrochen dargestellte Endlosband 300 ist flüssigkeitsdurchlässig ausgebildet. Das Endlosband 300 umschließt die Oberseite und die Unterseite sowie die Stirnseiten der Trennungsvorrichtung 10.

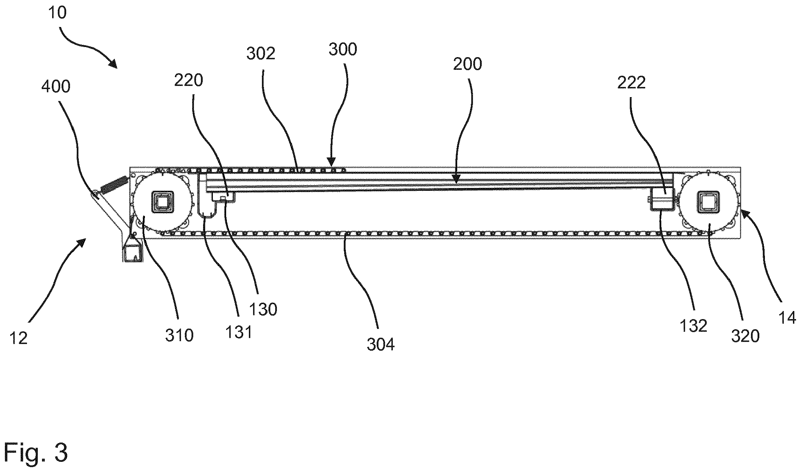

Insbesondere in Fig. 3 ist ersichtlich, wie das Ablaufelement 200 an dem Grundrahmen 100 angeordnet ist. Der Ablaufquerträger 130 und der Auflagerquerträger 132 weisen ein nach oben offenes Profil auf. Die Stützträger 220, 222 des Ablaufelements 200 weisen ein zu dem nach oben hin offenen Profil des Ablaufquerträgers 130 und Auflagerquerträgers 132 korrespondierendes Profil auf. Infolge dessen können die Stützträger 220, 222 in die nach oben hin offenen Profile des Ablaufquerträgers 130 und des Auflagerquerträgers 132 eingesetzt werden.

Der Auflagerquerträger 132 bildet in der Richtung vom ersten Ende 12 zum zweiten Ende 14 ein Festlager. Der Ablaufquerträger 130 bildet in der zuvor genannten Richtung ein Loslager. Der Ablaufquerträger 130 weist neben dem Auflager für den ersten Stützträger 220 eine tiefer liegende Ablaufquerrinne 131 auf. Alternativ kann die Ablaufquerrinne 131 auch als separates Element an dem Ablaufquerträger 130 angeordnet sein. Darüber hinaus kann die Ablaufquerrinne 131 auch als separates Element an dem Ablaufelement 200 und/oder an dem Grundrahmen 100 angeordnet sein.

In Fig. 3 ist insbesondere ersichtlich, dass eine sich auf dem Ablaufelement 200 befindliche Flüssigkeit durch die Neigung des Ablaufelements 200 in die Ablaufrichtung 212 fließt. Durch die Anordnung des Ablaufelements 200, die aus der Neigung resultierende Ablaufrichtung 212 sowie die Anordnung der Ablaufquerrinne 131 wird ersichtlich, dass die Flüssigkeit von dem Ablaufelement 200 in die Ablaufquerrinne 131 fließt. Die Ablaufquerrinne 131 ist mit einer Ablauföffnung 122 im ersten Längsträger verbunden. Infolge dessen kann eine durch das Endlosband 300 fließende Flüssigkeit in dem Ablaufelement 200 durch die Ablaufrinnen 210 aufgenommen werden. Die Flüssigkeit fließt durch die entstehende Neigung in Ablaufrichtung 212 in die Ablaufquerrinne 131. Die Ablaufquerrinne 131 weist vorzugsweise ebenfalls eine Neigung in Richtung der Ablauföffnung 122 auf. Dadurch kann eine Flüssigkeit vom Endlosband 300 zu einer außerhalb der Trennungsvorrichtung angeordneten Flüssigkeitssammelstation fließen.

An dem ersten Ende 12 der Trennungsvorrichtung 10 ist darüber hinaus ein Kotabstreifer 400 angeordnet. Der Kotabstreifer 400 soll einen auf dem Endlosband 300 befindlichen Kot bei Bewegung des Endlosbandes von diesem abstreifen. Durch das Abstreifen soll der Kot in eine definierte Position unter der Trennungsvorrichtung 10 angeordnet werden. Es ist insbesondere bevorzugt, dass der Kotabstreifer 400 derart konfiguriert oder gesteuert ist, dass der Kot nicht vollständig von dem Endlosband 300 entfernt wird, sondern ein Teil des Kots auf diesem verbleibt. Insbesondere ist es bevorzugt, dass dies durch ein Ansteuerverfahren realisiert wird. Durch das Verbleiben des Kots auf dem Endlosband 300 wird die Trennungsvorrichtung 10 von Tieren, insbesondere Schweinen, in dem Stall als Abkotbereich identifiziert und gemerkt. Folglich suchen die Tiere, insbesondere Schweine, die Trennungsvorrichtung 10 zum Abkoten auf und halten den Rest des Stalls im Wesentlichen sauber.

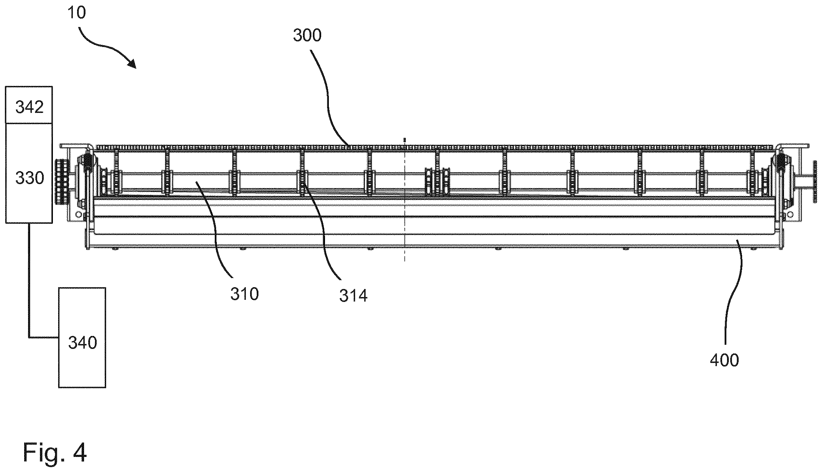

Die Fig. 4 zeigt eine schematische, zweidimensionale Stirnansicht der Trennungsvorrichtung 10 aus Fig. 1. Es ist insbesondere zu erkennen, dass die erste Umlenkeinheit 310 eine Mehrzahl an Umlenkscheiben 314 aufweist. Die Umlenkscheiben 314 sind derart ausgebildet, dass diese das Endlosband 300 in eine Bewegung versetzen können. Die Umlenkscheiben 314 weisen eine Art Zahnradstruktur auf, mit welchem sie eine form- und/oder kraftschlüssige Verbindung mit dem Endlosband 300 bilden können. Ferner umfasst die Trennungsvorrichtung 10 einen Antrieb 330. Der Antrieb 330 ist mit der ersten Umlenkeinheit 310 gekoppelt und treibt diese rotatorisch an. Der Antrieb 330 ist mit einer Steuerungsvorrichtung 340 gekoppelt, die angeordnet und ausgebildet ist, den Antrieb 330 zu steuern. Beispielsweise steuert die Steuerungsvorrichtung 340 den Antrieb 330 zyklenbasiert. Folglich kann der Antrieb 330 beispielsweise in vordefinierten Zeitabständen angesteuert werden und das Endlosband 300 in eine Bewegung versetzen. Ferner kann die Steuerungsvorrichtung 340 den Antrieb 330 auch nach einem Tagesschema steuern, wobei vorzugsweise Ruhezeiten der Tiere berücksichtigt werden. Darüber hinaus kann die Steuerungsvorrichtung 340 ausgebildet sein, den Antrieb 330 sensorbasiert zu steuern. Hierzu umfasst die Trennungsvorrichtung vorzugsweise mindestens einen Sensor 342.

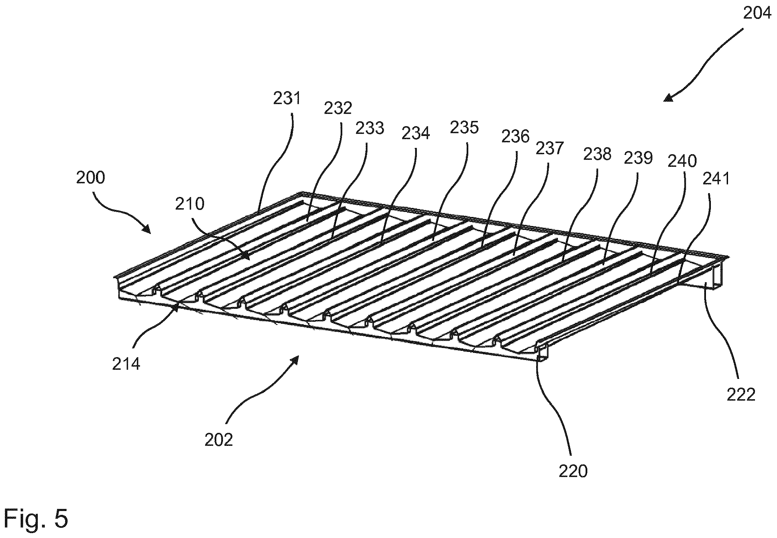

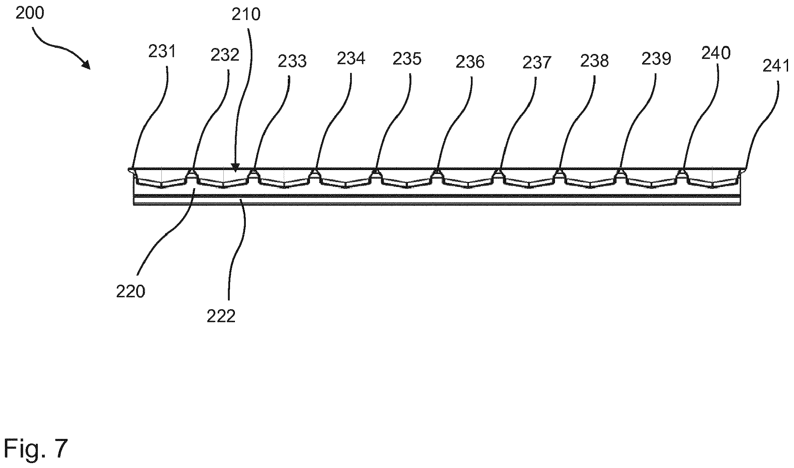

In den Fig. 5 - 7 sind Detailansichten des Ablaufelements 200 gezeigt. Insbesondere in den Fig. 5 und 7 ist der Aufbau des Ablaufelements mit einer Vielzahl von Ablaufrinnen gezeigt, wobei repräsentativ für alle anderen eine Ablaufrinne mit dem Bezugszeichen 210 versehen ist, wobei sich die Ablaufrinne 210 zwischen zwei Schultern 232, 233 erstreckt. Die Schultern 232 - 240 sowie die Randschultern 231, 241 bilden somit die seitlichen Begrenzungen der Ablaufrinnen.

Das Ablaufelement 200 erstreckt sich von einer Sperrseite 204 hin zu einer Ablaufseite 202. An der Sperrseite sind die Ablaufrinnen 210 durch eine Rückwand gesperrt. Das bedeutet, dass eine in der Ablaufrinne stehende Flüssigkeit an der Sperrseite 204 zumindest bis zu einer definierten Füllhöhe nicht ablaufen kann. An der Ablaufseite 202 sind die Abflussenden 214 angeordnet. Die Ablaufseite 202 zeichnet sich hinsichtlich der Ablaufrinnen insbesondere dadurch aus, dass eine in den Ablaufrinnen befindliche Flüssigkeit an der Ablaufseite 202 im Wesentlichen störungsfrei ablaufen kann.

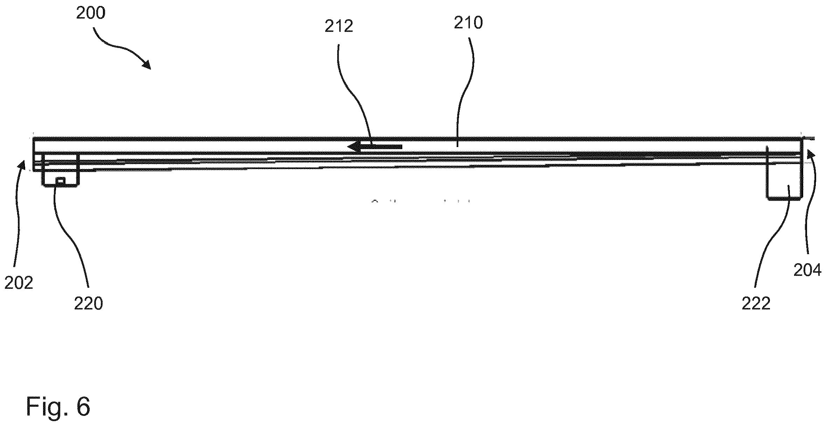

Aus der Fig. 6 wird ersichtlich, wie die Ablaufrichtung 212 des Ablaufelements 200 realisiert wird. Der erste Stützträger 220 weist in vertikaler Richtung eine geringere Erstreckung auf als der zweite Stützträger 222. Da der Ablaufquerträger 130 und der Auflagerquerträger 132 auf der gleichen Höhe in vertikaler Richtung an den Längsträgern 110, 120 angeordnet sind, entsteht durch die unterschiedlich langen Stützträger 220, 222 eine Neigung des Ablaufelements 200 relativ zu dem Grundrahmen 100. Der Grundrahmen 100 wird durch nicht gezeigte Füße im Wesentlichen horizontal aufgestellt, sodass infolge dessen das Ablaufelement 200 eine Neigung aufweist.

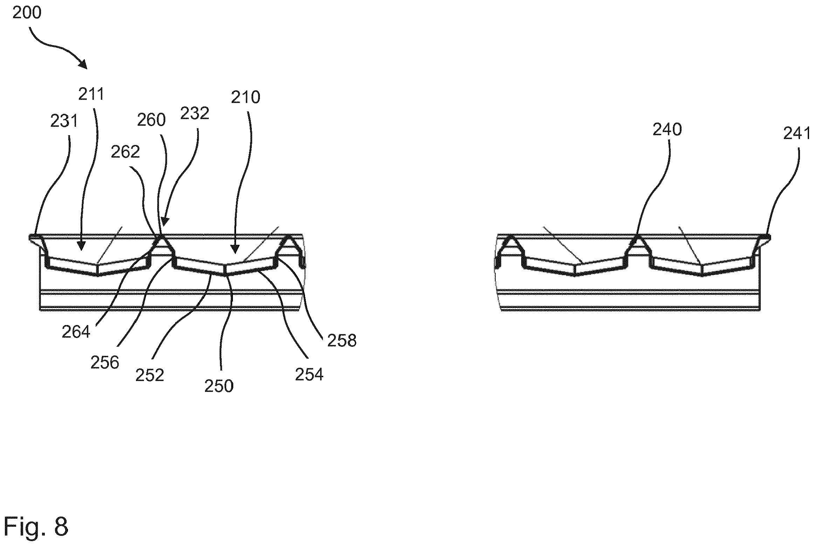

Fig. 8 zeigt schematische, zweidimensionale Detailansichten von Ablaufrinnen des in Fig. 5 gezeigten Ablaufelements. Der beispielhafte Aufbau einer Ablaufrinne wird beispielhaft anhand der Ablaufrinne 210 erläutert. Die Ablaufrinne 210 weist einen Rinnengrund 250 auf. Der Rinnengrund 250 ist die in vertikaler Richtung tiefste Stelle der Ablaufrinne 210. Von dem Rinnengrund 250 erstreckt sich ein erster Rinnenbodenflügel 252 und ein zweiter Rinnenbodenflügel 254 vom Rinnengrund 250 hinweg. Die Rinnenbodenflügel 252, 254 weisen eine Steigung auf. Infolge dessen fließt eine in die Ablaufrinne fließende Flüssigkeit stets in Richtung des Rinnengrunds 250. An den äußeren Enden der Rinnenbodenflügel 252, 254 ist jeweils eine Rinnenseitenwand 256, 258 angeordnet. Ein Rinnenbodenflügel bildet mit einer Rinnenseitenwand einen Schenkel der Ablaufrinne.

Besonders vorteilhaft ist es, wenn die Ablaufrinne 210 aus einem Metall hergestellt ist, wodurch die Ablaufrinne 210 gut formbar ist. Beispielsweise ist die erste Schulter 232 durch das Blech der Ablaufrinne 210 und das Blech der zweiten Ablaufrinne 211 gebildet. An dem höchsten Punkt der ersten Schulter 232 stoßen die Seitenwände 256 und 264 aneinander. Die Seitenwand 256 weist eine größere Erstreckung auf als die Seitenwand 264. Die an dieser Stelle größere Erstreckung, die über die der üblichen Erstreckung hinausgeht, wird als Randabschnitt 262 bezeichnet. Der Randabschnitt ist von der Seitenwand 256 am Knick 260 abgeknickt. Infolgedessen liegt das Blech der Ablaufrinne 210 in Form der Rinnenseitenwand 256 und der Randabschnitt 262 über der Rinnenseitenwand 264 der benachbarten zweiten Ablaufrinne 211. Infolge dessen wird eine flüssigkeitsdichte Verbindung der Ablaufrinne 210 und der zweiten Ablaufrinne 211 gebildet.

Ebenfalls ist in der Fig. 8 der Aufbau der ersten Randschulter 231 und der zweiten Randschulter 241 gezeigt. Die Randschultern 231, 241 werden durch Randabschnitte gebildet. Diese Randabschnitte sind derart von dem restlichen Material der Ablaufrinnen abgebogen, dass diese eine horizontale Auflage bilden. Mittels dieser horizontalen Auflage kann das Ablaufelement 200 zusätzlich zu den Stützträgern 220, 222 an dem Grundrahmen 100, insbesondere an den Längsträgern 110, 120, angeordnet werden.

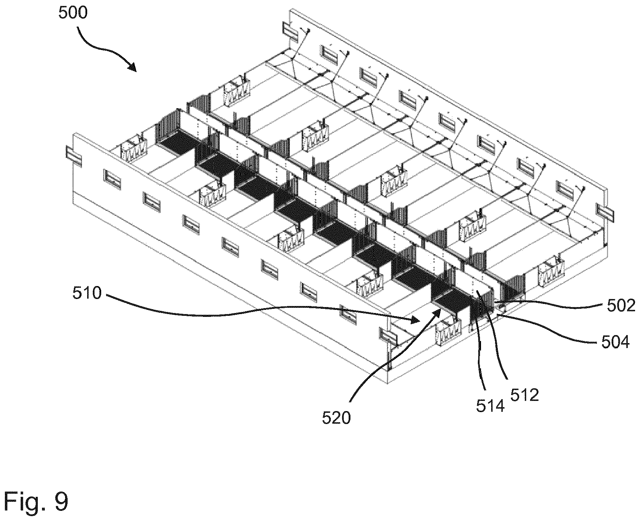

Fig. 9 zeigt eine schematische, dreidimensionale Ansicht eines Tierstalls mit einer Mehrzahl von in Fig. 1 gezeigten Trennungsvorrichtungen 520. Der Tierstall 500 umfasst einen in Längsrichtung mittig angeordneten Kontrollgang 502. Parallel und in vertikaler Richtung unter dem Kontrollgang 502 ist ein Entsorgungsgang 504 angeordnet. Entlang des Kontrollgangs 502 sind auf beiden Seiten eine Mehrzahl an Tierhaltebuchten 510 angeordnet. Die Tierhaltebuchten 510 erstrecken sich jeweils von dem Kontrollgang 502 hin zu einer Außenwand 506, 508 des Tierstalls 500. In den Tierhaltebuchten 510 ist jeweils eine Trennungsvorrichtung 520 angeordnet. Die Trennungsvorrichtung 520 grenzt an den Kontrollgang 502. Darüber hinaus erstreckt sich die Trennungsvorrichtung 520 über die gesamte Seite der Tierhaltebucht 510, die sich parallel zum Kontrollgang 502 erstreckt. Die Tierhaltebucht 510 ist durch eine Begrenzungswand 512 von dem Kontrollgang 502 abgegrenzt. Zwischen der Begrenzungswand 512 und der Trennungsvorrichtung 520 befindet sich ein Entsorgungsspalt 514. Infolgedessen kann ein sich auf dem Endlosband der Trennungsvorrichtung 520 befindlicher Kot durch eine Förderung dieses in Richtung des Kontrollgangs 502 durch den Entsorgungsspalt 514 entsorgt werden. Der Kot wird insbesondere durch den Entsorgungsspalt 514 in den Entsorgungsgang 504 befördert. Innerhalb des Entsorgungsgangs 504 können geeignete Vorrichtungen angeordnet werden, um den Kot von hier aus zu entsorgen.

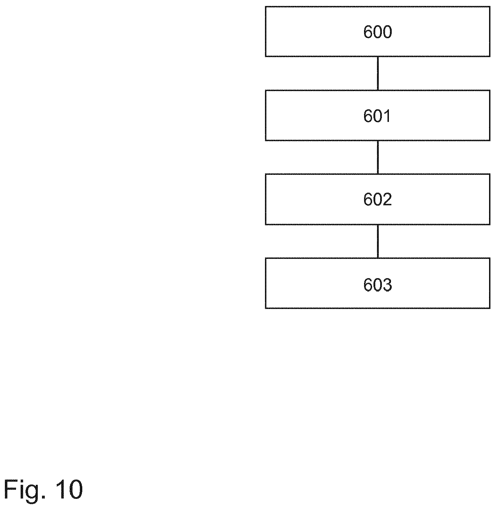

Fig. 10 zeigt ein schematisches Ablaufdiagramm einer beispielshaften Ausführungsform des Verfahrens zur Trennung von Kot und Urin in einem Tierstall. In einem ersten Schritt 600 wird ein beweglicher und flüssigkeitsdurchlässiger Boden bereitgestellt. Ein solcher Boden kann beispielsweise als Endlosband ausgebildet sein und vorzugsweise als Modulband. Die von auf dem Boden befindlichen Tieren abgegebene Flüssigkeit, insbesondere Urin, wird in Schritt 601 in Ablaufrinnen aufgefangen. Die Flüssigkeit tritt durch den Boden hindurch und wird unter dem Boden in den Ablaufrinnen aufgefangen. Der Boden stützt sich auf den Ablaufrinnen ab.

In Schritt 602 wird die Flüssigkeit in Längsrichtung der Ablaufrinnen abgeführt. Darüber hinaus wird die Flüssigkeit in Schritt 603 nach Abführen in Längsrichtung in Querrichtung abgeführt. Die Flüssigkeit kann beispielsweise an einem Abflussende der Ablaufrinnen in eine Querrinne abfließen, die orthogonal zu den Ablaufrinnen angeordnet ist. Ferner kann das Verfahren den Schritt umfassen Sammeln von Kot auf dem beweglichen Boden.

Die Trennungsvorrichtung hat den Vorteil, dass eine autonome Trennungsvorrichtung für Tierställe bereitgestellt wird, die die flüssigen und festen Exkremente von Tieren, insbesondere Schweinen, trennt. Darüber hinaus bietet die vorliegende Trennungsvorrichtung den Vorteil, dass ein Endlosband eingesetzt werden kann, das besonders dem Tierwohl entspricht und darüber hinaus eine optimale Durchlässigkeit für flüssige Exkremente aufweist. Dies wird insbesondere dadurch erreicht, dass das Endlosband 300 selber nicht das Gewicht eines Tieres zu tragen hat. Dies wiederum resultiert daraus, dass das Endlosband auf den Schultern des Ablaufelements 200 aufliegt. Die Schultern bilden eine innere Unterstützung für das Endlosband.

### BEZUGSZEICHEN

- 10, 520: Trennungsvorrichtung
- 12: erstes Ende
- 14: zweites Ende
- 100: Grundrahmen
- 110: erster Längsträger
- 120: zweiter Längsträger
- 122: Ablauföffnung
- 124: erste Durchtrittsöffnung
- 125: zweite Durchtrittsöffnung
- 126: dritte Durchtrittsöffnung
- 127: vierte Durchtrittsöffnung
- 130: Ablaufquerträger
- 131: Ablaufquerrinne
- 132: Auflagerquerträger
- 200: Ablaufelement
- 202: Ablaufseite
- 204: Sperrseite
- 210: Ablaufrinne
- 211: zweite Ablaufrinne
- 212: Ablaufrichtung
- 214: Abflussende
- 220: erster Stützträger
- 222: zweiter Stützträger
- 231: erste Randschulter
- 232: erste Schulter
- 233: zweite Schulter
- 234: dritte Schulter
- 235: vierte Schulter
- 236: fünfte Schulter
- 237: sechste Schulter
- 238: siebte Schulter
- 239: achte Schulter
- 240: neunte Schulter
- 241: zweite Randschulter
- 250: Rinnengrund
- 252: erster Rinnenbodenflügel
- 254: zweiter Rinnenbodenflügel
- 256: erste Rinnenseitenwand
- 258: zweite Rinnenseitenwand
- 260: Knick
- 262: Randabschnitt
- 264: dritte Rinnenseitenwand
- 300: Endlosband
- 302: Obertrum
- 304: Untertrum
- 310: erste Umlenkeinheit
- 312: Antriebsritzel
- 314: Umlenkscheibe
- 320: zweite Umlenkeinheit
- 330: Antrieb
- 340: Steuerungsvorrichtung
- 342: Sensor
- 400: Kotabstreifer
- 500: Tierstall
- 502: Kontrollgang
- 504: Entsorgungsgang
- 510: Tierhaltebucht
- 512: Begrenzungswand
- 514: Entsorgungsspalt
- 600: Schritt 1
- 601: Schritt 2
- 602: Schritt 3
- 603: Schritt 4

## Patentansprüche

1. Trennungsvorrichtung (10, 510) zur Bildung einer Standfläche für Nutztiere, insbesondere Schweine, und zur Emissionsreduktion in Ställen, insbesondere in Schweineställen, umfassend
- einen Grundrahmen (100),
- ein Ablaufelement (200) mit
∘ zwei oder mehreren Ablaufrinnen (210), die jeweils ein Abflussende (214) umfassen, und
∘ Schultern (232-241) zwischen denen sich jeweils eine der zwei oder mehreren Ablaufrinnen (210) orthogonal zu einer Ablaufrichtung (212) erstreckt,
- ein flüssigkeitsdurchlässiges Endlosband (300) mit einem Obertrum (302) und einem Untertrum (304),
- wobei das Ablaufelement (200) derart an dem Grundrahmen (100) angeordnet ist, dass eine Ablaufrichtung (212) der zwei oder mehreren Ablaufrinnen (210) in Richtung des Abflussendes (214) gerichtet ist und das Abflussende (214) derart positioniert ist, dass eine aus diesem abfließende Flüssigkeit eine Ablaufquerrinne (131) erreicht,
- wobei das Ablaufelement (200) zwischen dem Obertrum (302) und dem Untertrum (304) angeordnet ist, und
- wobei das Obertrum (302) auf mindestens einer Schulter (232-241) aufliegt.

2. Trennungsvorrichtung (10, 520) nach Anspruch 1,
- umfassend einen Ablaufquerträger (130), wobei vorzugsweise der Ablaufquerträger (130) als erstes Auflager für das Ablaufelement (200) wirkt, und/oder
- wobei der Grundrahmen (100) einen Auflagerquerträger (132) aufweist, wobei vorzugsweise der Auflagerquerträger (132) als zweites Auflager für das Ablaufelement (200) wirkt, und/oder
- wobei der Grundrahmen (100) einen ersten Längsträger (110) und/oder einen zweiten Längsträger (120) umfasst, und der Ablaufquerträger (130) und/oder der Auflagerquerträger (132) an dem ersten Längsträger (110) und/oder dem zweiten Längsträger (120) angeordnet ist bzw. sind.

3. Trennungsvorrichtung (10, 520) nach mindestens einem der vorherigen Ansprüche, wobei
- das Endlosband (300) als Modulband mit einer Vielzahl von aneinander angeordneten Modulen ausgebildet ist, und
- wobei das Endlosband (300) einen Öffnungsgrad von 2 % - 10 %, insbesondere 2 % - 8%, bevorzugt 2 % - 6 %, besonders bevorzugt 3 % - 5% aufweist, und/oder
- das Modulband in einem im Wesentlichen geraden Abschnitt des Endlosbands (300) ein Spaltmaß von 0,2 mm bis 1,0 mm, insbesondere 0,2 mm bis 0,8 mm, bevorzugt 0,2 mm bis 0,6 mm, weiter bevorzugt von 0,2 mm bis 0,5 mm, insbesondere 0,3 mm bis 0,4 mm, vorzugsweise 0,34 mm bis 0,36 mm aufweist.

4. Trennungsvorrichtung (10, 520) nach mindestens einem der vorherigen Ansprüche, wobei
- die Ablaufquerrinne (131) an dem Ablaufelement (200) angeordnet ist, wobei eine sich in den zwei oder mehreren Ablaufrinnen (210) befindliche Flüssigkeit in die Ablaufquerrinne (231) fließt, und/oder
- die Ablaufquerrinne (131) an dem Ablaufquerträger (130) angeordnet ist und/oder die Ablaufquerrinne (131) integral mit dem Ablaufquerträger (130) ausgebildet ist, und/oder
- die Ablaufquerrinne (131) geneigt angeordnet ist.

5. Trennungsvorrichtung (10, 520) nach mindestens einem der vorherigen Ansprüche, wobei
- der im Wesentlichen ebene Abschnitt des Obertrums (302) als Standfläche für Nutztiere, insbesondere Schweine, ausgebildet ist und sich das Ablaufelement (200) im Wesentlichen vollständig unter der Standfläche erstreckt.

6. Trennungsvorrichtung (10, 520) nach mindestens einem der vorherigen Ansprüche, wobei
- sich der Grundrahmen (100) von einem ersten Ende zu einem zweiten Ende erstreckt und an dem ersten Ende eine erste Umlenkeinheit (310) und an dem zweiten Ende eine zweite Umlenkeinheit (320) angeordnet ist, und
- das Endlosband (300) die erste Umlenkeinheit (310) und die zweite Umlenkeinheit (320) umschlingt.

7. Trennungsvorrichtung (10, 520) nach mindestens einem der vorherigen Ansprüche, wobei
- die zwei oder mehreren Ablaufrinnen (210) jeweils orthogonal zu der Ablaufrichtung (212) einen Rinnenquerschnitt aufweisen und der Rinnenquerschnitt ein U-förmiges Profil und/oder ein V-förmiges Profil aufweist, und/oder
- die zwei oder mehreren Ablaufrinnen (210) in Ablaufrichtung (212) eine Sicke aufweisen, und/oder
- vorzugsweise das U-förmige Profil einen Radius von kleiner 400 mm, und/oder kleiner 300 mm, und/oder kleiner 250 mm, und/oder kleiner 200 mm, und/oder kleiner 194 mm, und/oder kleiner 190 mm, und/oder kleiner 175 mm, und/oder kleiner 150 mm, und/oder kleiner 100 mm, und/oder kleiner 75 mm, und/oder kleiner 50 mm, und/oder kleiner 25 mm, und/oder kleiner 15 mm, und/oder kleiner 10 mm, und/oder kleiner 5 mm aufweist und/oder das V-förmige Profil einen inneren Öffnungswinkel von kleiner 180 Bogengrad, und/oder kleiner 170 Bogengrad, und/oder kleiner 162 Bogengrad, und/oder kleiner 150 Bogengrad, und/oder kleiner 140 Bogengrad, und/oder kleiner 130 Bogengrad, und/oder kleiner 120 Bogengrad, und/oder kleiner 100 Bogengrad, und/oder kleiner 90 Bogengrad, und/oder kleiner 45 Bogengradaufweist.

8. Trennungsvorrichtung (10, 520) nach mindestens einem der vorherigen Ansprüche, wobei
- eine Schulter (232-241) zwischen einer ersten Ablaufrinne der zwei oder mehreren Ablaufrinnen (210) und eine zweite Ablaufrinne der zwei oder mehreren Ablaufrinnen (210) durch einen ersten Randabschnitt (262) der ersten Ablaufrinne und einen zweiten Randabschnitt (264) der zweiten Ablaufrinne gebildet wird, und vorzugsweise
- der erste Randabschnitt über dem zweiten Randabschnitt angeordnet ist, wobei der erste Randabschnitt und/oder der zweite Randabschnitt entlang einer Längsrichtung abgeknickt und/oder abgebogen ist bzw. sind.

9. Trennungsvorrichtung (10, 520) nach mindestens einem der vorherigen Ansprüche, wobei
- eine erste äußere Ablaufrinne der zwei oder mehreren Ablaufrinnen (210) mit einem ersten äußeren Randabschnitt dem ersten Längsträger (110) zugewandt ist und eine zweite äußere Ablaufrinne der zwei oder mehreren Ablaufrinnen (210) mit einem zweiten äußeren Randabschnitt dem zweiten Längsträger (120) zugewandt ist, und
- der erste äußere Randabschnitt und/oder der zweite äußere Randabschnitt angeordnet und ausgebildet ist bzw. sind, auf dem ersten Längsträger (110) und/oder dem zweiten Längsträger (120) aufzuliegen, wobei vorzugsweise der erste äußere Randabschnitt und/oder der zweite äußere Randabschnitt abgeknickt und/oder umgebogen sind.

10. Trennungsvorrichtung (10, 520) nach mindestens einem der vorherigen Ansprüche, umfassend
- eine Steuerungsvorrichtung (340), die angeordnet und ausgebildet ist, einen Antrieb (330) des Endlosbandes (300) zu steuern, und/oder
- mindestens einen Sensor (342), ausgewählt aus der Gruppe bestehend aus
∘ Drucksensor,
∘ Gewichtssensor,
∘ Feuchtigkeitssensor,
∘ ph-Wertsensor,
∘ Leitwertsensor,
∘ Durchflussmengensensor,
∘ Präsenzsensor, insbesondere Lichtschranke, Bewegungsmelder und Kamera,
∘ Ultraschallsensor,
∘ transponderbasierter Sensor,
∘ Ammoniakgehaltsensor,
∘ Luftfeuchtigkeitssensor, und
∘ Temperatursensor, und
wobei die Steuerungsvorrichtung (340) angeordnet und ausgebildet ist, in Abhängigkeit eines oder mehrerer Sensorsignale einer oder mehrerer der Sensoren (342), den Antrieb zu steuern.

11. Trennungsvorrichtung (10, 520) nach mindestens einem der vorherigen Ansprüche, umfassend mindestens eine Reinigungsdüse, die angeordnet und ausgebildet ist, eine Flüssigkeit auf das Untertrum (304) zu fördern, wobei vorzugsweise die Reinigungsdüse an dem Ablaufelement (200) angeordnet ist,
und/oder
umfassend mindestens eine Reinigungsdüse, die angeordnet und ausgebildet ist, eine Flüssigkeit auf die Unterseite des Obertrums zu fördern.

12. Tierstall (500), insbesondere Schweinestall, umfassend
- mindestens eine Tierhaltebucht (510),
- eine in der Tierhaltebucht (510) angeordnete Trennungsvorrichtung (10, 520) nach einem der Ansprüche 1-11, und
- wobei die Trennungsvorrichtung (10, 520) derart angeordnet ist, dass eine Förderrichtung des Obertrums (302) gerichtet ist in Richtung
∘ eines Kontrollgangs (502), und/oder
∘ eines Entsorgungsgangs (504), und/oder
∘ eines Begrenzungselements, und/oder
- wobei sich die Trennungsvorrichtung (10, 520) über die gesamte Breite der Tierhaltebucht (510) erstreckt.

13. Tierstall (500) nach dem vorherigen Anspruch 12,
- wobei eine Förderebene des Obertrums (302) im Wesentlichen in der gleichen Ebene angeordnet ist wie der Kontrollgang (502), und/oder
- wobei der Entsorgungsgang (504) in vertikaler Richtung unter dem Kontrollgang (502) angeordnet ist, und
- der Entsorgungsgang (504) und das Endlosband (300) derart angeordnet sind, dass auf dem Endlosband (300) geförderter Kot in den Entsorgungsgang (504) gefördert wird.

14. Tierstall (500) nach mindestens einem der vorherigen Ansprüche 12-13,
- umfassend eine erste Tierhaltebucht (510) mit einer ersten Trennungsvorrichtung (10, 520) und eine zweite Tierhaltebucht (510) mit einer zweiten Trennungsvorrichtung (10, 520), wobei die erste Trennungsvorrichtung (10, 520) benachbart zu der zweiten Trennungsvorrichtung (10, 520) angeordnet ist, und vorzugsweise
- umfassend eine dritte Tierhaltebucht (510) mit einer dritten Trennungsvorrichtung (10, 520) und eine vierte Tierhaltebucht (510) mit einer vierten Trennungsvorrichtung (10, 520), wobei die dritte Trennungsvorrichtung (10, 520) benachbart zu der vierten Trennungsvorrichtung (10, 520) angeordnet ist, und
- die erste Trennungsvorrichtung (10, 520) und die zweite Trennungsvorrichtung (10, 520) an eine erste Seite des Kontrollgangs (502) angrenzen und die dritte Trennungsvorrichtung (10, 520) und die vierte Trennungsvorrichtung (10, 520) an eine zweite der ersten gegenüberliegenden Seite des Kontrollgangs (502) angrenzen, oder
- die erste Trennungsvorrichtung (10, 520) und die zweite Trennungsvorrichtung (10, 520) an den Kontrollgang (502) angrenzen und die dritte Trennungsvorrichtung (10, 520) und die vierte Trennungsvorrichtung (10, 520) an einen zweiten Kontrollgang (502) angrenzen, wobei vorzugsweise die den Trennungsvorrichtungen (10, 520) abgewandten Seiten der ersten und dritten Tierhaltebucht (510) aneinander angeordnet sind und/oder die den Trennungsvorrichtungen (10, 520) abgewandten Seiten der zweiten und vierten Tierhaltebucht (510) aneinander angeordnet sind.

15. Verfahren zur Trennung von Kot und Urin in einem Tierstall (500), insbesondere Schweinestall, insbesondere in einem Tierstall nach mindestens einem der Ansprüche 12-14, umfassend
- Bereitstellen eines beweglichen, flüssigkeitsdurchlässigen Bodens;
- Abstützen des Bodens auf Ablaufrinnen (210);
- Auffangen von Flüssigkeit in den Ablaufrinnen (210);
- Abführen der Flüssigkeit in Längsrichtung der Ablaufrinnen (210) und anschließend in Querrichtung;
- vorzugsweise Sammeln von Kot auf dem beweglichen Boden.
